# EUROPEAN PATENT SPECIFICATION

(11) **EP 3 114 895 B1**
(45) Date of publication and mention of the grant of the patent: **11.09.2019**
(21) Application number: 14708873.6
(22) Date of filing: 07.03.2014
(51) Int. Cl.: H04W 74/00, H04W 4/00

(54) **HANDLING MESSAGES**
HANDHABUNG VON NACHRICHTEN
MANIPULATION DE MESSAGES

(43) Date of publication of application: 11.01.2017
(73) Proprietor: Telefonaktiebolaget LM Ericsson (publ), 164 83 Stockholm (SE)
(72) Inventor: RÖNNEKE, Hans, S-43434 Kungsbacka (SE)
(74) Representative: Ericsson
(86) International application number: PCT/EP2014/054496
(87) International publication number: WO 2015/131959

(56) References cited:
- WO-A1-2011/051182
- WO-A1-2013/008208

## Description

### TECHNICAL FIELD

The embodiments herein generally relate to a wireless device, a method in the wireless device, a gateway node, a method in the gateway node, a Radio Access Network (RAN) node, a method in the RAN node and to computer program products. More particularly, the embodiments herein relate to handling messages in a communications system.

### BACKGROUND

The existing Third Generation Partnership Project (3GPP) networks especially Long Term Evolution (LTE) and Evolved Packet Core (EPC) (i.e. Evolved Packet System (EPS)) are designed for high bandwidth communication (e.g. 10-100 Mbps) at a certain cost and price level. The price level for the end user may be typically in the range $20 to $100 a month.

Mass deployment of Machine to Machine (M2M) devices in a Networked Society, sometimes referred to as Internet-of-Things, has often completely different requirements. For the most constrained M2M devices, a low bandwidth (e.g. down to 100 bps) at a cost level in the range $1 to $10 per year would be more adequate. Many of the simplest M2M devices such as sensor and tracking type of devices, does also usually only send data uplink, i.e. no downlink communication needed for their normal operation mode. Meeting these Internet of Things (loT) requirements would require some different design choices than the traditional LTE and EPC.

In the Networked Society the loT is an integral part. For many loT applications, a message based low bandwidth and low data volume communication is most appropriate. Some of these loT applications may use only Mobile Originated (MO) and uplink communication i.e. messages are sent only from the wireless device to the network, never back to the wireless device (non-confirmed mode). Some other of the applications may predominantly use MO communication but only occasionally use Mobile Terminated (MT) and bidirectional communication (e.g. at software upgrade etc.). In those rare cases when MT communication is needed, it may typically be delay tolerant, i.e. it is ok if it takes several seconds, minutes, hours or sometimes even days before the wireless device responds and the bidirectional communication can take place.

The existing technology in LTE/EPC networks is based on establishing bearers before Internet Protocol (IP) packets are communicated uplink or downlink. The bearers are established both over the radio (i.e. radio bearers between the wireless device and the evolved Node B (eNB)) and within the core network (i.e. GPRS Tunneling Protocol (GTP) tunnels between the eNB, the Serving GateWay (SGW) and the Packet data network GateWay (PGW)). GPRS stands for general packet radio service. The bearers enable an efficient forwarding of large number of packets e.g. IP packets.

The term radio bearer mentioned above may be described as a channel offered by layer 2 (i.e. the data link layer) to higher layers (e.g. the network layer) for the transfer of either user or control data between the wireless device and the RAN.

Existing technology also comprises some potential solutions for a more resource efficient messaging in 3GPP networks discussed as part of the Release-12 (Rel-12) Small Data and Device Triggering Enhancements (SDDTE) study.

A problem with the existing technology is that the establishing of radio bearers is inadequate if just one or a few packets are to be forwarded. Over the radio, the radio bearers are established when packets shall be conveyed and typically removed again after 10 to 60 seconds. The creation and deletion of the radio bearers requires an amount of signaling and processing both in the radio network and the core network that are not in proportion to the data that are to be transmitted by the wireless device. The core network bearers/tunnels are often long lived and remain as long as the device stay registered, but signaling is required to maintain the tunnels e.g. when the wireless device moves, at network node/board failures or when nodes are taken out of service by the operators. In addition memory resources are required in multiple nodes to maintain the core network bearers/tunnels. The maximum number of memory contexts used often decides the equipment price for the operator.

If the number of data packets to convey in the operator network such as for loT wireless devices are very few, a radio bearer based approach may be too costly to use for the price level that end users are willing to pay.

Another problem with the existing approach is that MT communication may consume extensive processing resources in the network especially in Radio Access Network (RAN) nodes. When a paged wireless device does not respond to a paging, the network repeats the paging in more and more RAN nodes, by which large amount of processing and radio resources may be consumed.

Various solutions have been identified regarding the problem transmitting and receiving small amount of data efficiently through a communications system. Some of these solutions are dependent on passing data through the control plane node Mobility Management Entity, MME, some are dependent on resource consuming paging to convey downlink data, and others are dependent on established bearers in one way or another.

WO 2013/008208 A1 discloses a simplified signaling procedure for establishing and terminating connections for small data transmissions (SDTs) by wireless devices.

WO2011/051182 A1 discloses a solution for allowing for a group of M2M devices to register in the network as a single device only.

### SUMMARY

An objective of embodiments herein is therefore to obviate at least one of the above disadvantages and to provide improved handling of messages in a communications system.

According to a first aspect, the object is achieved by a method in a wireless device for handling messages in a communications system. The wireless device conveys an UL message over a radio interface to a RAN node. The wireless device receives an indication of a DL message addressed to the wireless device. The indication is received from the RAN node as part of radio interface signaling for the UL message.

According to a second aspect, the object is achieved by method in a RAN node for handling messages in a communications system. The RAN node receives an UL message over a radio interface from a wireless device. The RAN node obtains an indication of a DL message addressed to the wireless device. The RAN node transmit the indication to the wireless device as part of radio interface signaling for the UL message.

According to a third aspect, the object is achieved by a method in a gateway node for handling messages in a communications system. The gateway node receives, from a wireless device via a RAN node, an UL message addressed to a network server. The gateway node provides, to a RAN node, information associated with a DL message addressed to the wireless device 101.

According to a fourth aspect, the object is achieved by a method in a registration node for handling messages in a communications system. The registration node receives, an UL message from a wireless device over a radio interface. The registration node obtains an indicator indicating a DL message addressed to the wireless device. The registration node sends the indicator to the wireless device as part radio interface signaling for the UL message.

According to a fifth aspect, the object is achieved by a wireless device for handling messages in a communications system. The wireless device is arranged to convey an UL message over a radio interface to a RAN node. The wireless device is further arranged to receive an indication of a DL message addressed to the wireless device. The indication is received from the RAN node as part of radio interface signaling for the UL message.

According to a sixth aspect, the object is achieved by a RAN node for handling messages in a communications system. The RAN node is arranged to *receive* an UL message over a radio interface from a wireless device. The RAN node is arranged to *obtain* an indication of a DL message addressed to the wireless device. The RAN node is arranged to *transmit* the indication to the wireless device as part of radio interface signaling for the UL message.

According to a seventh aspect, the object is achieved by a gateway node for handling messages in a communications system. The gateway node is arranged to receive, from a wireless device via a RAN node, an UL message addressed to a network server. The gateway node is further arranged to provide, to a RAN node, information associated with a DL message addressed to the wireless device.

According to an eight aspect, the object is achieved by a registration node for handling messages in a communications system. The registration node is arranged to receive an UL message from a wireless device over a radio interface. The registration node is arranged to obtain an indicator indicating a DL message addressed to the wireless device. The registration node is arranged to send the indicator to the wireless device as part radio interface signaling for the UL message.

Since the indication of the DL message addressed to the wireless device is provided as part of the radio interface signalling for the UL message, handling of messages in the communications system is improved.

Embodiments herein afford many advantages, of which a non-exhaustive list of examples follows:
The embodiments herein may provide an advantage of enabling very resource efficient communication for a large group of wireless devices, that predominantly sends only small amounts of data e.g. messages, and that predominantly communicates uplink e.g. loT wireless devices such as sensor devices, meter devices, tracking devices etc., while still allowing normal LTE/EPC communication establishment after some delay e.g. for device configuration or remote software updates.

The existing LTE/EPC network is not able to cope with a large number of such loT sensor and tracking devices that sends data frequently e.g. every minute. The signaling capacity of the communications system would have had to be increased several times, which would have been impossible to justify for these low revenue loT wireless devices.

Another advantage of the embodiments herein may be that the gateway node and the registration node may be integrated in existing EPC nodes, or be new nodes in the existing EPC, or be implemented as a separate Overlay Core Network.

Another advantage of the embodiments herein may be that no per wireless device bearers are required. That is, communication of messages or packets may be done without using session management procedures which require signaling between nodes in the network and hence consumes resources in the network nodes and delays the transmission of messages or packets.

Another advantage of the embodiments herein may be that Mobile Terminated (MT) may be established without using paging procedures e.g. such as paging in 3GPP Evolved-Universal Terrestrial Access Network (E-UTRAN), Universal Terrestrial Access Network (UTRAN) or GSM EDGE Radio Access Network (GERAN), where GSM is short for Global System for Mobile Communications and EDGE is short for Enhanced Data rates for GSM Evolution. Notifications to the wireless device about waiting downlink messages or IP packets may be conveyed in the user plane, more specifically in lower layer acknowledgements to uplink messages or packets or signaling which the wireless device makes with the network. Paging procedures typically consumes resources in the radio network, but that may be avoided with the embodiments described herein.

The embodiments herein are not limited to the features and advantages mentioned above. A person skilled in the art will recognize additional features and advantages upon reading the following detailed description. The invention is set out in the appended set of claims.

### BRIEF DESCRIPTION OF THE DRAWINGS

The embodiments herein will now be further described in more detail in the following detailed description by reference to the appended drawings illustrating the embodiments and in which:
- Fig. 1: is a schematic block diagram illustrating embodiments of a communications system.
- Fig. 2: is a signaling diagram illustrating embodiments of a method.
- Fig. 3: is a schematic block diagram illustrating embodiments of a communications system.
- Fig. 4: is a schematic block diagram illustrating embodiments of a communications system.
- Fig. 5: is a signaling diagram illustrating embodiments of indicating the indicator to the wireless device at an UL message.
- Fig. 6: is a signaling diagram illustrating embodiments of indicating the indicator to the wireless device at signaling with the registration node.
- Fig. 7: is a schematic block diagram illustrating embodiments of a protocol stack.
- Fig. 8: is a flow chart illustrating embodiments of a method in a wireless device.
- Fig. 9: is a schematic block diagram illustrating embodiments of a wireless device.
- Fig. 10: is a flow chart illustrating embodiments of a method in a RAN node.
- Fig. 11: is a schematic block diagram illustrating embodiments of a RAN node.
- Fig. 12: is a flow chart illustrating embodiments of a method in a gateway node.
- Fig. 13: is a schematic block diagram illustrating embodiments of a gateway node.
- Fig. 14: is a flow chart illustrating embodiments of a method in a registration node.
- Fig. 15: is a schematic block diagram illustrating embodiments of a registration node.

The drawings are not necessarily to scale and the dimensions of certain features may have been exaggerated for the sake of clarity. Emphasis is instead placed upon illustrating the principle of the embodiments herein.

### DETAILED DESCRIPTION

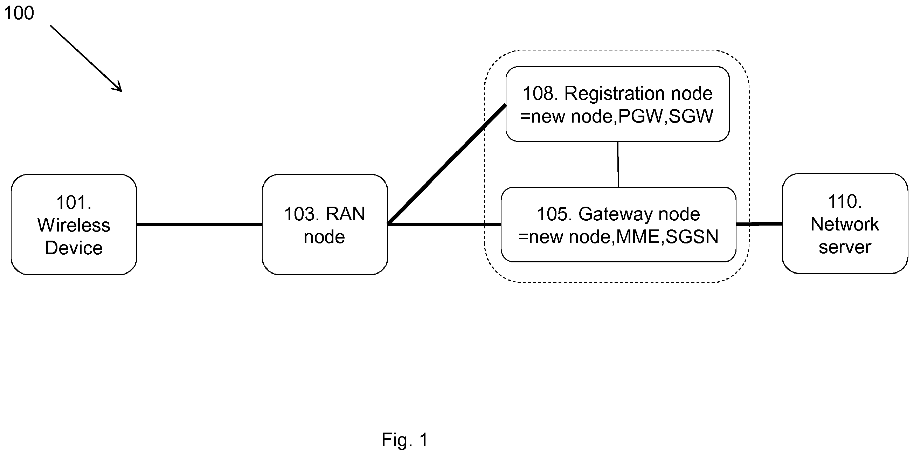

**Figure 1** depicts a **communications system 100** in which embodiments herein may be implemented. The communications system 100 may in some embodiments apply to one or more radio access technologies such as for example LTE, LTE Advanced, or any other future versions of LTE, Wideband Code Division Multiple Access (WCDMA), Global System for Mobile Communications (GSM), any other Third Generation Partnership Project (3GPP) radio access technology, Narrowband Machine Type Communication Radio Access Technologies, or other radio access technologies such as e.g. Wireless Local Area Network (WLAN).

The wireless communications network 100 comprises a **wireless device 101.** The wireless device 101 may be a device by which a subscriber may access services offered by an operators network and services outside operator's network to which the operators radio access network and core network provide access, e.g. access to the Internet. The wireless device 101 may be any device, mobile or stationary, enabled to communicate in the communications network, for instance but not limited to e.g. user equipment, mobile phone, smart phone, sensors, meters, vehicles, household appliances, medical appliances, media players, cameras, Machine to Machine (M2M) device, Device to Device (D2D) device, loT device or any type of consumer electronic, for instance but not limited to television, radio, lighting arrangements, tablet computer, laptop or Personal Computer (PC). The wireless device 101 may be portable, pocket storable, hand held, computer comprised, or vehicle mounted devices, enabled to communicate voice and/or data, via the radio access network, with another entity, such as another device or a server.

The wireless device 101 may be a device arranged to send small amounts of data e.g. messages, and that predominantly communicates uplink e.g. wireless devices such as sensor devices, meter devices, tracking devices etc., while still allowing normal LTE/EPC communication establishment after some delay e.g. for device configuration or remote software updates. The exact amount that is considered to be small may differ per system.

The communication system 100 further comprises a **RAN node 103** serving a cell and being capable of communicating with the wireless device 101. The RAN node 103 may also be seen as serving the wireless device 101 since the wireless device 101 is located in the cell which the RAN node 103 serves. The RAN node 103 may be an evolved NodeB (eNB), a Radio Network Controller (RNC), Base Station Controller (BSC) or any other communications system unit capable of communicating with the wireless device 101 being present in the cell.

The communications system 100 further comprises a **gateway node 105** and a **registration node 108.** The gateway node 105 may act as an anchor point for the wireless device 101 and may control routing of messages from and to the wireless device 101 via the RAN node 103. The gateway node 105 may handle the indication of a DownLink (DL) message addressed to the wireless device 101. The gateway node 105 may be a standalone gateway node, a combined gateway node 105 and registration node 108, a M2M GateWay (MGW), a Packet Data Network-GateWay (PDN-GW), a Serving GateWay (SGW), a Gateway General packet radio service Support Node (GGSN), a Mobility Management Entity (MME), a Serving General packet radio service Support Node (SGSN) or a combined MME and SGSN node. The gateway node 105 may also be seen as a function integrated in an existing EPC network node. The gateway node 105 may also be referred to as an loT gateway node.

The registration node 108 may register the wireless device 101 in the communications system 100 and it may assign a gateway node and an IP address to the wireless device 101. The gateway node 105 may assist the registration node 108 in assigning said IP address. The registration node 108 may also be involved in passing the indication of the DL message to the wireless device 101 at mobility or re-registration events. The registration node 108 may be a standalone registration node, a combined gateway node 105 and registration node 108, a MGW, a PDN-GW, a SGW, a GGSN, a MME, a SGSN or a combined MME and SGSN node. The registration node 108 may also be seen as a function integrated in an existing EPC network node e.g. in MME and/or in SGSN.

An overview of example embodiments of the RAN node 103, the gateway node 105 and the registration node 108 is seen in table 1 below. However, any other suitable implementation of these node and any other suitable combinations of the nodes is also applicable.

**Table 1**

| **Gateway node 105** | **Registration node 108** | **RAN node 103** |
|---|---|---|
| Packet Data Network Gateway (PDN-GW or PGW) | Mobile Management Entity (MME) | Evolved Node B (eNodeB) |
| Serving Gateway (S-GW) | Serving GPRS Support Node (SGSN) | Radio Network Controller (RNC) |
| Gateway GPRS Support Node (GGSN) | Combined MME/SGSN | Base Station Controller (BSC) |
| Combined PDN-GW/S-GW | Machine-to-machine serving node (M2M-SN) | Narrowband Base Station |
| Machine-to-machine Gateway (M2M-GW) | other | other |
| other | | |

The term "other" in table 1 indicates any other suitable node than the ones exemplified in the table.

The communications system 100 further comprises a **network server 110,** which may be a server or a host located e.g. on the Internet or on a Packet Data Network (PDN) as defined by 3GPP. Particularly the network server 110 may be a 3GPP Service Capability Server (SCS), as defined in 3GPP TS 23.682, V12.0.0.

It should be noted that the communication links in the communications system 100 may be of any suitable kind including either a wired or wireless link. The link may use any suitable protocol depending on type and level of layer (e.g. as indicated by the OSI model) as understood by the person skilled in the art.

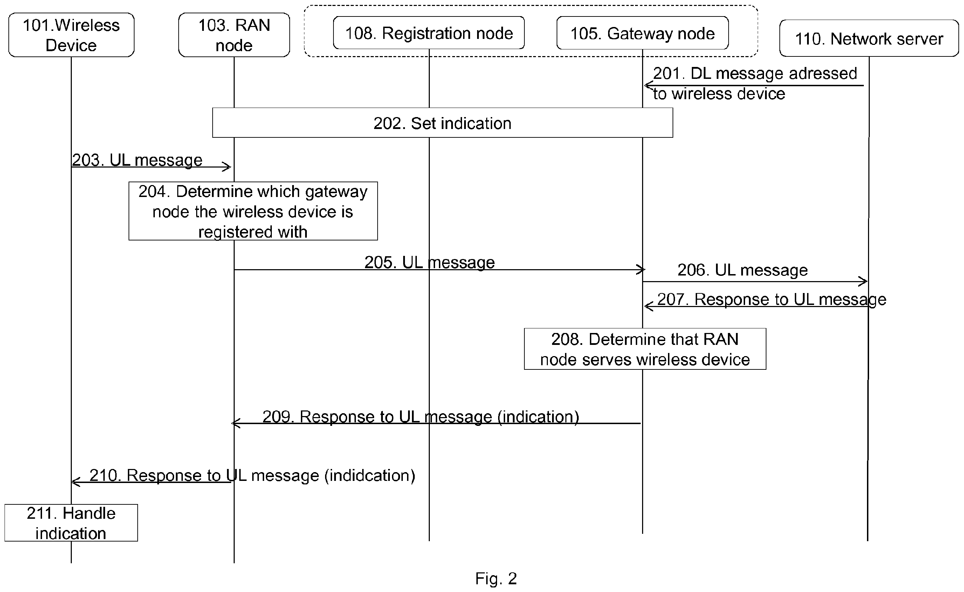

A method for handling messages in the communications system 100 according to some embodiments will now be described with reference to the signaling diagram depicted in **Figure 2****.** The method comprises the following steps, which steps may as well be carried out in another suitable order than described below.

### Step 201

The network server 110 sends, to the gateway node 105, a DL message addressed to the wireless device 101. The DL message may be a non-IP based message or an IP based message e.g. IPv6 packet or IPv4 packet. In some embodiments, the gateway node 105 may send an acknowledgement of the DL message to the network server 110.

### Step 202

An indication of the DL message addressed to the wireless device 101 is set by at least one of the gateway node 105 and the RAN node 103. Setting the indication in the gateway node 105 may be performed in one embodiment, whereas setting the indication in the RAN node 103 may be performed in another embodiment when the wireless device is stationary i.e. non-mobile. This may be known in the gateway node 105 from when the IP address of the wireless device 101 was allocated at registration to the network.

In case the gateway node 105 sets the indication, the gateway node 105 may either store the DL message, forward it to the RAN node 103 or any other suitable order for storing or discard the DL message.

In case the RAN node 103 sets the indication, the gateway node 105 provides the DL message (after it has received it is step 201) to the RAN node 103. Then, the RAN node 103 sets the indication of the DL message addressed to the wireless device 101. After having set the indication, the RAN node 103 may store the DL message, it may discard it or it may provide it to any other suitable order for storage. The RAN node 103 may also provide the indication to the registration node 108. In case the RAN node 103 is the node which sets the indication, the wireless device 101 may be a stationary device. The RAN node 103 may then (for a stationary wireless device 101) be able to immediately acknowledge the UL message to the wireless device 101 and release the radio resources more quickly (instead of waiting some milliseconds for the gateway node 105 to respond).

In addition to indicating the DL message addressed to the wireless device 101, the indicator may further comprise information which indicates the sender of the DL message, i.e. the source node or the originator of the DL message. Such information may be e.g. IP address, port, protocol (e.g. User Datagram Protocol (UDP) port), identity etc. of the sender.

An indicator may be described as a parameter which points to, suggests or shows something. The indication may be a single flag, it may be at least part of the actual DL message, or it may comprise information such as the IP address and port of the network server 110 who sent the DL message or even a full or part of another DL message that was earlier received by the RAN node 103.

The indication may, as described above, be an indication of the DL message addressed to the wireless device 101. This may also be described as that there is a DL message waiting to be transmitted to the wireless device 101, that a DL message to the wireless device 101 has been received, that the gateway node 105 has received a DL message addressed to the wireless device 101, that a DL message is present, that a DL message is waiting etc. The indication may also be referred to as a Message Waiting Indication (MWI).

### Step 203

The wireless device 101 conveys an UL message to the RAN node 103 over a radio interface. Such UL message may be referred to as MO message or MO communication. As part of conveying the UL message the RAN node 103 may keep a temporary radio connection e.g. Radio Resource Control (RRC) connection, to facilitate sending any subsequent messages e.g. return DL messages to the wireless device 101. The RAN node 103 may also keep a temporary device context e.g. UE context, to facilitate sending any subsequent return DL messages to the wireless device 101. The temporary device context may store a RAN node 103 internal identity of the temporary radio connection and a sequence number (or temporary identifier) that is passed to the gateway node 105 together with the UL message. Additional information may also be stored in the temporary device context. The UL message may be sent over an Ir interface to the RAN node 103. The UL message may be an IP based message or a non-IP based message.

### Step 204

The RAN node 103 may determine which gateway node the wireless device 101 is registered with. In other words, there may be a plurality of candidate gateway nodes, and one of these candidate gateway nodes is the gateway node with which the wireless device 101 is registered. Registration in a gateway node 105 means that the wireless device 101 have been assigned an IP address or identity which the gateway node 105 is responsible for, i.e. handling DL message routing (e.g. IP routing). This is different from the Registration node 108 which typically is responsible for registering the wireless device 101 within the network, assigning security keys, handling mobility management etc. In this embodiment, it is the gateway node 105 that the wireless device 101 is registered with. The RAN node 103 may determine this based on policy based routing. In some embodiments, the RAN node 103 may further determine this based on information available in the RAN node 103 of which gateway node(s) that is responsible for the wireless device 101 associated with the source address or the source identity comprised in the UL message, i.e. the address or identity of the wireless device 101.

The RAN node 103 may uses preconfigured information, e.g. in the form of a table, which maps source information in the UL message, e.g. IP address ranges, to gateway node address information. Such table may be for example as seen in Table 2 below. The left column of table 1 comprises examples of source information in the UL message (e.g. address or identity of the wireless device 101) and the right column comprises examples of gateway node addresses, i.e. the address of the gateway node with which the source of the UL message is registered.

**Table 2**

| **Source information in UL message** | **Gateway node address** |
|---|---|
| Source information 1 | Gateway node address 1 |
| Source information 2 | Gateway node address 2 |
| Source information 3 | Gateway node address 3 |

### Step 205

The RAN node 103 sends, e.g. forwards, the UL message to the gateway node 105 determined in step 204. The RAN node 103 may include its own IP address or identity in the UL message e.g. in a tunneling header, before the UL message is sent to the gateway node 105. This may be to allow any subsequent DL message to be returned to the wireless device 101 via the RAN node 103. The RAN node may also include a sequence number or temporary identifier that is unique in the RAN node 103. The sequence number (or temporary identifier) may be stored in the device context (e.g. UE context) in the RAN node 103 and used to find the radio connection when conveying any subsequent DL messages to the wireless device 101, see step 203 above.

For MO communication, UL messages sent from the wireless device 101 to the RAN node 103 (which serves the wireless device 101 at its location) may be sent to the gateway node 105 based on policy-based routing i.e. the source address or source information as is shown in Table 1 above, e.g. the IP address, of the source of the UL message, i.e. of the wireless device 101.

### Step 206

The gateway node 105 sends the UL message to the network server 110.

### Step 207

The network server 110 sends a response to the UL message to the gateway node 105. The response message may be e.g. an acknowledgment of the received UL message in step 206.

### Step 208

The gateway node 105 may determine which RAN node that serves the wireless device 101, e.g. the RAN node 103. In other words, the gateway node may determine the location of the wireless device 101. This may be done if it is the RAN node 103 that would set the indicator, i.e. the gateway node 105 only sends the DL message to the RAN node 103 and does not set any indicator. The determining of the RAN node 103 to be the one that serves the wireless device 101 may be performed based on the received UL message.

The RAN node 103 may be determined to serve the wireless device 101 when the wireless device 101 is a stationary wireless device or a non-mobile wireless device.

For any mobile wireless device 101, the gateway node 105 may not have any information about the location of the wireless device 101. So not until the wireless device 101 sends an UL message, the gateway node 105 knows where the wireless device 101 is (i.e. what RAN node 103 serving the wireless device 101) at least in that instant of time, and may send the indicator to the wireless device 101.

### Step 209

The gateway node 105 sends the response to the UL message to the RAN node 103. The response may comprise an indication of the DL message addressed to the wireless device 101.

Associated with the transmission of the UL message, the gateway node 105 may check if any DL messages are addressed to the wireless device 10 and if so, the indicator is returned to the wireless device 101 in the response to the UL message telling the wireless device 101 there have been DL messages for the wireless device 101.

### Step 210

The RAN node 103 sends the response to the UL message to the wireless device 101. The response is sent as part of radio interface signaling for the UL message in step 203, i.e. not using a radio bearer. In an alternative embodiment a default Data Radio Bearer (DRB) especially configured for messaging may be used for conveying DL messages and UL messages. The response sent to the wireless device comprises the indication of the DL message addressed to the wireless device 101.

Associated with the transmission of the UL message, the RAN node 103 may check if any DL messages are addressed to the wireless device 101 and if so, an indicator, e.g. a message waiting indication, is returned to the wireless device 101 telling the wireless device 101 there have been at least one DL message addressed to the wireless device 101. The RAN node 103 may check if any DL messages are addressed to the wireless device 101 by obtaining the indicator that itself has previously set and possibly stored in step 202, it may be an indicator that has been set by the gateway node 101 and transmitted to the gateway node 105 for storing, the RAN node 103 may query the registration node 108 for the indicator etc.

The indication may be a single flag, it may be at least part of the actual DL message, or it may comprise information such as the IP address and port of the network server 110 who sent the DL message or even a full or part of another DL message that was earlier received by the RAN node 103.

### Step 211

The wireless device 101 handles the received indication. For example, the handling of the received indication may involve that the wireless device 101 may retrieve the whole DL message (in case the indication in step 210 did not comprise any parts of the DL message) or a part of the DL message (in case the indication in step 210 comprised at least part of the DL message or in case the wireless device 101 is only interested in a part of the DL message). The wireless device 101 may retrieve at least part of the DL message from a node in which the DL message is comprised. At least part of the DL message may be received from the actual sender of the DL message, from a pre-known server in network 100 or from a server which address or identity was comprised in the indication and where the DL message has been stored (e.g. the gateway node 105 or the RAN node 103).

For retrieval of at least part of the DL message, the wireless device 101 may start by establishing at least one radio bearer in the communications network 100 and retrieving at least part of the DL message via the radio bearer. Thus, when the indication indicates there have been DL messages, the wireless device 101 may send a service request to the network and establishes a normal Evolved Packet System (EPS) bearer and checks with the source of the DL message, e.g. the network server 110, e.g. on the PDN/Internet, what's up. The DL message may be e.g. a new configuration or a new firmware that needs to be downloaded to the wireless device 101.

In some embodiments, it may be sufficient for the wireless device 101 to get information that a DL message addressed to it has been received, for example, if the wireless device 101 always communicates with the same network server 110. In such example, the wireless device 101 then establishes bidirectional communication (e.g. a radio bearer) and asks the network server 110 what the DL message was.

Even if a wireless device 101 may respond to the indication of the DL message by initiating communication e.g. with the network server 110 by establishing a radio bearer, it is not required to do so. In some embodiments, the indication as such may be a sufficient message to the wireless device 101, for example when at least part of the DL message was comprised in the indication. Subsequent communication, i.e. establishing of radio bearers, might in such cases not be needed.

### UL message forwarding as path discovery for DL message indication

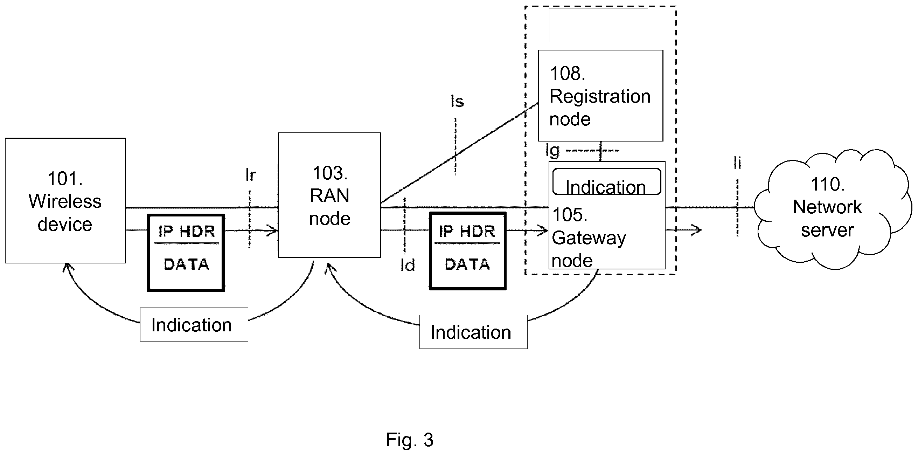

**Figure 3** illustrates an embodiment of policy based forwarding of the UL message as path discovery for the indication of the DL message addressed to the wireless device 101.

The wireless device 101 may register in the network at the registration node 108 in figure 3. The registration results in that an IP address is allocated to the wireless device 101. The IP address being associated with one of potentially multiple gateway nodes, e.g. gateway node 105.

The wireless device 101 may create a UL message with the data it wants to transmit (e.g. sensor data or position data), with its own IP address as source IP address and the destination IP address of the destination server. As exemplified in figure 3, if the UL message is an IP message, the UL message may comprise an Internet Protocol Header (IP HDR) and payload data. The wireless device 101 sends the UL message to the RAN node 103 e.g. over the Ir interface in figure 3, without creating any specific data bearer over the radio. The wireless device 101 waits for an acknowledgement from the RAN node 103 that the UL message has been received and with a possible indication of a DL message included in the acknowledgement.

Before acknowledging to the wireless device 101, the RAN node 103 may forward the UL message to the gateway node 105 e.g. over the Id interface and for example by using policy-based routing. That is, the RAN node 103 may find the gateway node 105 by comparing the source IP address of the received UL message with pre-configured information it has. Finding the correct gateway node 105 may be used for discovering if any indication of a DL message has been set for the wireless device 101. The RAN node 103 waits for an acknowledgement from the gateway node 105 that the UL message has been received and with a possible indication of a DL message included in the acknowledgement, before it acknowledges to the wireless device 101.

The gateway node 105 may receive the UL message and by that may discover the current location (i.e. RAN node 103) of the wireless device 101. The gateway node 105 may return an acknowledgement including any indication of DL message it had stored for the wireless device 101 to the RAN node 103. The gateway node 105 may forward the UL message it received on the li interface to the receiver, e.g. the network server 110, on a PDN or the Internet.

When the RAN node 103 has returned the acknowledgement to the wireless device 101 that the UL message has been received by the network and forwarded towards the destination, e.g. the network server 110, and any indication of DL message have been included in the acknowledgement, the RAN node 103 may release the radio resources.

If an indication of a DL message is included in the acknowledgement, the wireless device 101 may initiate bidirectional communication with the network server 110 on the PDN/Internet. This may e.g. be done by establishing normal EPC bearers. Such establishing of EPC bearers may have been preceded by a "revocable deletion of PDN connection.

As seen in figure 3, the interface between the RAN node 103 and the registration node 108 may be referred to as an Is interface, and the interface between the registration node 108 and the gateway node 105 may be referred to as an Ig interface.

### DL messaging by indication

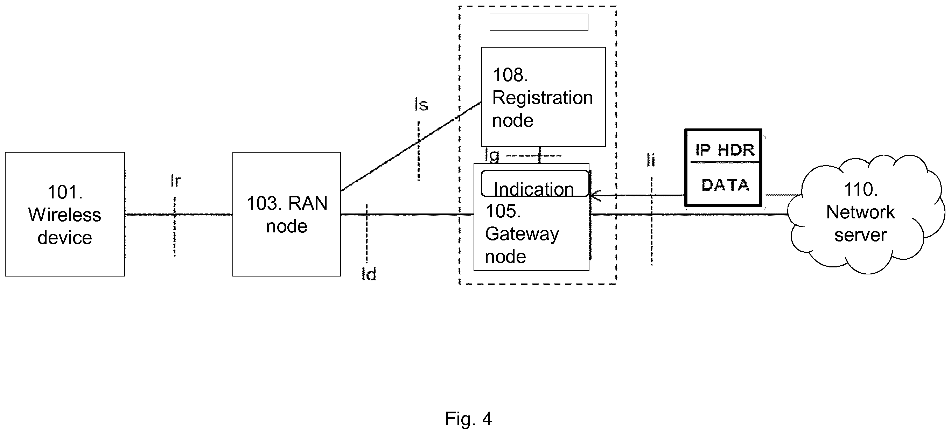

**Figure 4** illustrates embodiments of how the indication of a DL message set by the gateway node 105.

A DL message addressed to the wireless device 101 is received by the gateway node 105 on e.g. the li interface. The DL message may comprise data to be delivered to the wireless device 101. As exemplified in figure 4, the DL message may comprise an IP HDR and payload data in the case where the DL message is a DL IP message.

The gateway node 105 sets the indication of DL message associated to the wireless device 101 i.e. associated to the IP address of the wireless device 101. The indication of the DL message may be a single flag or it may comprise more information such as the IP address and port of the server who sent the DL message or even a full or part of another DL message that was earlier received by the network. When the indication of the DL message has been set in the gateway node 105, the DL message may be discarded.

The indication of the DL message may be kept in the gateway node 105 until e.g. it can be delivered to the wireless device 101, or until the IP address of the wireless device 101 is released, or until a timer expires. The indication of the DL message may be delivered to the wireless device 101 next time the network is in contact with the wireless device 101, e.g. at a future UL message delivery or at some signaling with the registration node 108 such as e.g. periodic re-registration (e.g. periodic Routing Area Update/Tracking Area Update (RAU/TAU) in EPC networks) or mobility signaling (e.g. RAU/TAU in EPC networks). The registration node 108 may at signaling events with the wireless device 101 queries the gateway node 105 to try to retrieve any indication of DL message that may have been set for the wireless device 101.

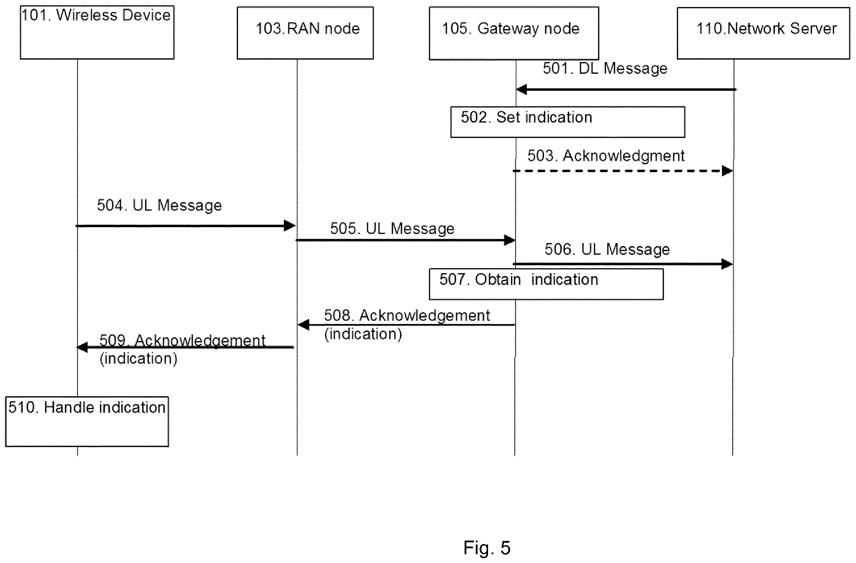

**Figure 5** is a signaling diagram illustrating embodiments a method for UL message forwarding as path discovery for the DL message indication. The method comprises the following steps, which steps may be performed in any suitable order than described below:

### Step 501

This step corresponds to step 201 in figure 2. A DL message addressed to the wireless device 110 is received in the gateway node 105. The DL message may be sent from the network server 110.

### Step 502

This step corresponds to step 202 in figure 2. The gateway node 105 sets the indication of the DL message associated to the wireless device 101 e.g. associated to the IP address or an identity of the wireless device 101. As mentioned earlier, the indication may be a single flag or it may comprise more information such as the IP address and port of the server, e.g. the network server 110, who sent the DL message or even a the full DL message or a part of the DL message that was earlier received by the network. When the indication of the DL message has been set in the gateway node 105, the DL message may optionally be stored in an internal memory for later transfer to the wireless device 101. It may be stored by the gateway node 105 or by some other node in the network assigned to store messages. The DL message may alternatively and optionally be discarded by the gateway node 105, e.g. typically when the wireless device 101 will request the network server 110 to resend the DL message.

### Step 503

In some embodiments, the DL message is acknowledged by the gateway node 105 to the sender of the DL message, e.g. the network server 110. This step is indicated with a dotted arrow since it is an optional step.

### Step 504

This step corresponds to step 203 in figure 2. Some time later, i.e. directly after or a time after steps 501-503 has been performed, the wireless device 101 wants to send an UL message. It may be to the same server that sent the DL message in step 501, or it may be to a different server. The wireless device 101 creates a UL message (e.g. an IP packet) with the data it wants to transmit (e.g. sensor data, meter data or position data). Source and destination addresses or identities may be comprised in the UL message. The wireless device 101 sends the UL message to the RAN node 103 (e.g. eNB or RNC). The UL message may be sent without creating any specific data bearer over the radio. The wireless device 101 may wait for an acknowledgement from the RAN node 103 that the message has been received and with a possible indication of a DL message comprised in the acknowledgement.

### Step 505

This step corresponds to step 204 and step 205 in figure 2. When the RAN node 103 has received the UL Message, the RAN Node forwards the UL message to the gateway node 105 which is responsible for the wireless device 101. The RAN node 103 may use Policy-Based Routing to select which gateway node to forward the UL message to. Policy-Based Routing may use the source address or source identity comprised in the UL message, to compare with a routing table in the RAN node 103 for finding the gateway node which is responsible for the wireless device 101 with that IP address or identity, e.g. the gateway node 105.

### Step 506

This step corresponds to steps 206, 207 and 208 in figure 2. The gateway node 105 receives the UL message and by that discovers the current location (i.e. RAN node 103) of the wireless device 101. The current location of the wireless device 101 may be stored in the gateway node 105. For stationary wireless devices 101 the current location may be stored a longer time until it is changed or removed. For mobile (i.e. non-stationary) wireless devices 101 the current location may be stored a shorter time until a timer expires or a DL message (e.g. response to the UL message) is received in the gateway node 105. The gateway node 105 may forward the UL message towards the destination network server 110.

### Step 507

This step corresponds to step 209 in figure 2. The gateway node 105 may return an acknowledgement to the RAN node that the UL message has been received. If there are any indications of DL message addressed to the wireless device 101 stored in the gateway node 105 for the wireless device 101, the indication is comprised in the acknowledgement. The gateway node 105 may use the source address or identity of the wireless device 101 (as indicated in the UL message received in step 505) to locate any stored DI message indication for the wireless device 101.

### Step 508

This step corresponds to step 210 in figure 2. The RAN node 103 receives the acknowledgement from the gateway node 105. The RAN node 103 sends an acknowledgement to the wireless device 101 and includes any indications of DL message addressed to the wireless device 101 included in the acknowledgement received from the gateway node 105. The RAN node 103 may release the radio resources after the acknowledgement has been sent, or alternatively keep the radio resources if any subsequent messages are expected based on indications in the UL message from the wireless device 101 or the acknowledgement from the gateway node 105 or any configuration parameter in the RAN node 103.

### Step 509

This step corresponds to step 211 in figure 2. The wireless device 101 receives the acknowledgement from the RAN node 103 and handles the indication received in the acknowledgement. If an indication of a DL message addressed to the wireless device 101 is included in the acknowledgement but the full DL message was not part of the indication, the wireless device 101 may take action to retrieve the full DL message. Different ways may be used for retrieving the DL message, including communicating with the node where the message is stored (e.g. the gateway node 105 or other node or server), initiating bidirectional communication with the server which sent the message, etc. Another action may be to establish normal EPS connectivity with the server which sent the message. This may include using already established EPC bearers or establishing or reestablishing new EPC bearers. Such establishing of EPC bearers may have been preceded by a "revocable deletion of PDN connection".

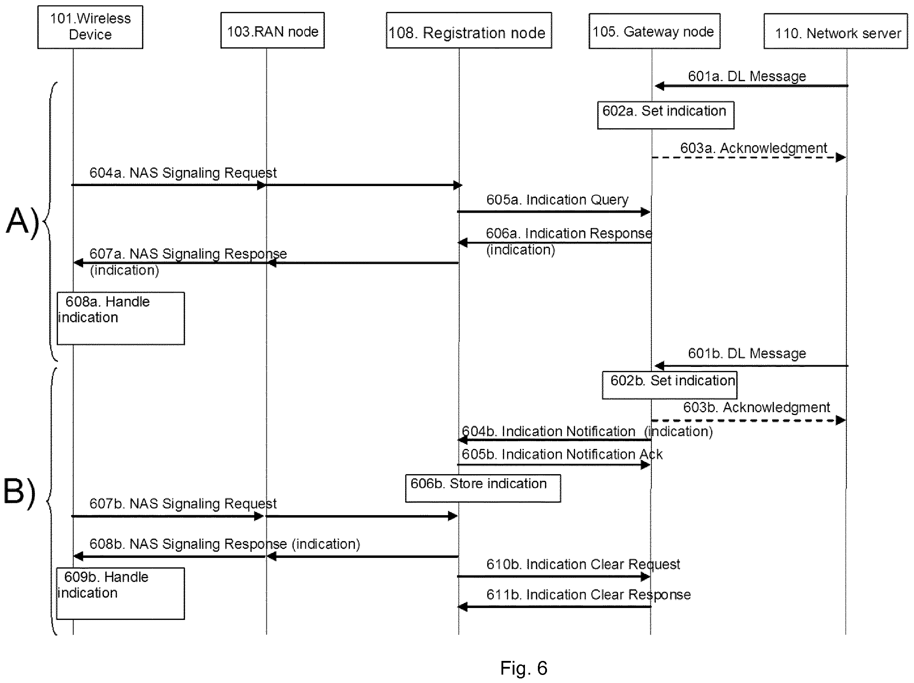

Embodiments of the method for handling messages will now be described with reference to the signaling diagram illustrated in **Figure 6****.** In particular, Figure 6 illustrates two alternative embodiments, A and B, for transmitting the indication of DL message to the wireless device at signaling with the registration node 108. Steps comprised in alternative A is indicated with an "a" and steps comprised in alternative B is indicated with a "b". The method comprises the following steps, which step may be performed in any suitable order than described below:

### ALTERNATIVE EMBODIMENT A:

### Step 601 a

This step corresponds to step 201 in figure 2 and step 501 in figure 5. A DL message addressed to the wireless device 101 is received in the gateway node 105. The DL message may be sent from the network server 110.

### Step 602a

This step corresponds to step 202 in figure 2 and step 502 in figure 5. The gateway node 105 sets the indication of the DL message associated to the wireless device 101, e.g. associated to the IP address or an identity of the wireless device 101. The indication of the DL message may be a single flag or it may comprise more information such as the IP address and port of the server who sent the DL message or even a the full DL message or a part of the DL message that was earlier received by the network. When the indication has been set in the gateway node 105, the DL message may optionally be discarded.

### Step 603a

This step corresponds to step 503 in figure 5. The DL message may be acknowledged by the gateway node 105 to the sender of the DL message, e.g. the network server 110. This is an optional step, which is indicated with a dotted arrow in figure 6.

### Step 604a

This step corresponds to step 203 in figure 2. The wireless device 101 sends a Non-Access Stratum (NAS) signaling request message (e.g. a TAU Request message) to the registration node 108. The NAS signaling message may be seen as an UL message sent from the wireless device 101, via the RAN node 103 and to the registration node 108.

### Step 605a

The registration node 108 queries the gateway node 105 assigned to the wireless device 101 at the preceding registration (e.g. Attach) if there is any indication for a DL message set for the wireless device 101. In other words, it queries the gateway node 105 if it has set an indication in step 602a.

### Step 606a

The gateway node 105 responds to the registration node 108 with any indication of DL message that were stored for the wireless device 101. The gateway node 105 may clear the indication(s) of DL message when it has been passed to the registration node 108.

### Step 607a

This step corresponds to step 210 in figure 2. The indication(s) of DL message is passed from the registration node 108 to the wireless device 101 comprised in a NAS Signaling Response message. The NAS Signaling Response message may be seen as a response to the UL message in step 604a and as part of the radio interface signaling for the UL message. The NAS Signaling Response message is sent from the registration node 108, via the RAN node 103, and to the wireless device 101.

### Step 608a

This step corresponds to step 211 in figure 2 and step 509 in figure 5. When the wireless device 101 has received the NAS Signaling Response from the RAN node 103 in the previous step 607, the wireless device 101 handles the received indication. If the indication of DL message was comprised in the NAS Signaling Response but the full DL message was not part of the indication, the wireless device 101 may take action to retrieve the full DL message. Different ways may be used for retrieving the DL message, including communicating with the node where the DL message is stored (e.g. the gateway node 105 or other node or server), initiating bidirectional communication with the server which sent the message, etc. Another action may be to establish normal EPS connectivity with the server which sent the DL message. This may include using already established EPC bearers or establishing or reestablishing new EPC bearers. Such establishing of EPC bearers may have been preceded by a "revocable deletion of PDN connection".

### ALTERNATIVE B:

### Step 601b

This step corresponds to step 201 in figure 2, step 501 in figure 5 and step 601a in figure 6. A DL message addressed to the wireless device 101 is received in the gateway node 105. The DL message may be sent from the network server 110.

### Step 602b

This step corresponds to step 202 in figure 2, step 502 in figure 5 and step 602a in figure 6. The gateway node 105 sets the indication of the DL message associated to the wireless device 101 e.g. associated to the IP address or an identity of the wireless device 101. As mentioned earlier, the indication may be a single flag or it may comprise more information such as the IP address and port of the server who sent the DL message or even a the full DL message or a part of the DL message that was earlier received by the network. When the indication of the DL message has been set in the gateway node 105, the DL message may optionally be discarded.

### Step 603b

This step corresponds to step 503 in figure 5 and step 603a in figure 6. This step corresponds to step 503 in figure 5. The DL message may be acknowledged by the gateway node 105 to the sender of the DL message, e.g. the network server 110. This is an optional step, which is indicated with a dotted arrow in alternative B of figure 6.

### Step 604b

An Indication Notification may be sent from the gateway node 105 to the registration node 108 that is serving the wireless device 101. The indication(s) of the DL message for the wireless device 101 may be included in the notification.

### Step 605b

The registration node 108 may send an acknowledgement of the Indication Notification to the gateway node 105.

### Step 606b

The registration node 108 may store the indication(s) of the DL message addressed to the wireless device 101.

### Step 607b

This step corresponds to step 203 in figure 2 and step 504 in figure 5. A NAS signaling request message (e.g. TAU Request) is sent from the wireless device 101 to the registration node 108. The NAS Signaling Request message may be an UL message and may be seen as being sent from the wireless device 101, via the RAN node 103 and to the registration node 108.

### Step 608b

This step corresponds to step 210 in figure 2, step 508 in figure 5 and step 607a in figure 6. The registration node 108 processes the NAS request message from step 807b and sends a NAS Signaling Response message (e.g. TAU Response) to the wireless device 101 including any indication(s) for DL message in the response message. The registration node 108 obtains the indication of the DL message from what it has stored in step 606b. The NAS Signaling Response message is sent as part of the radio interface signaling for the UL message. The NAS Signaling Response message may be seen as being sent from the registration node 108, via the RAN node 103 and to the wireless device 101.

### Step 609b

This step corresponds to step 211 in figure 2, step 509 in figure 5 and step 608a in figure 6. When the wireless device 101 received the NAS signaling response from the RAN node 103, the wireless device 101 handles the received indication of the DL message. If the indication of a DL message was comprised in the acknowledgement but the full DL message was not part of the message waiting indication, the wireless device 101 may take action to retrieve the full DL message. Different ways may be used for retrieving the full DL message, including communicating with the node where the message is stored (e.g. the gateway node 105 or other node or server), initiating bidirectional communication with the server which sent the DL message, etc. Another action may be to establish normal EPS connectivity with the Server which sent the DL message. This may include using already established EPC bearers or establishing or reestablishing new EPC bearers. Such establishing of EPC bearers may have been preceded by a "revocable deletion of PDN connection".

### Step 610b

The registration node 108 may send an Indication Clear request to the gateway node 105 to remove the indication(s) of DL message as they have been delivered to the wireless device 101.

### Step 611b

The gateway node 105 clears the indication of the DL message as requested and sends an acknowledgement of the clear request to the registration node 108.

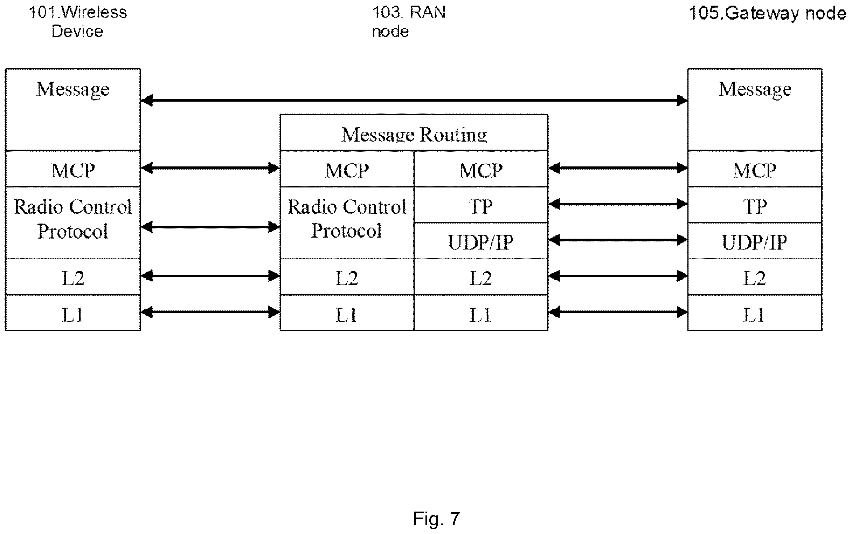

**Figure 7** illustrates an example embodiment of a protocol stack for UL and DL messaging.

In figure 7, Layer 1 (L1) is a physical layer on respective connection.

Layer 2 (L2) is a link layer on respective connection.

Radio Control Protocol is radio access specific. On an LTE and WCDMA access it may be the Radio Resource Control protocol. Other radio control protocol may also be used. UDP/IP is as specified within IETF.

TP is a Tunneling Protocol. It may be specifically developed for 3GPP messaging, or may be an existing tunneling protocol (e.g. GTP-U or IP-over-IP tunneling), or an evolution of an existing tunneling protocol (e.g. evolved GTP). The Tunneling Protocol has functions as described in step 204 and step 205 for figure 2, for example node unique sequence numbering, temporary identifier, RAN node address or identity etc. There is one tunnel per node pair, i.e. the tunnel is common for all wireless devices 101 camping on the same RAN node 103 and registered in the same gateway node 105.

MCP is a Messaging Control Protocol. It includes information passed between the three nodes and between the wireless device 101 and the gateway node 105 (relayed via the RAN node 103). For example the Acknowledge messages including the indicator sent from the gateway node 105 to the RAN node 103 (step 209 in figure 2 and step 508 in figure 5) and from the RAN node 103 to the wireless device 101 (step 210 in figure 2 and step 509 in figure 5).

The Message Routing function routes messages uplink to the gateway node 105 and downlink to the wireless device 101. Uplink routing may be based on Policy-Based Routing in using an identity of the wireless device 191 or source IP address of the wireless device 101 received in the UL message or in the MCP header. A preconfigured routing table may be used to find the gateway node 105 associated with a specific wireless device 101.

Downlink routing is based on information received together with the DL message, in the TP header or the MCP header. A sequence number, temporary identifier previously allocated by the RAN node 103 and now received back from the gateway node 105 may be used to select which radio connection or data radio bearer to use for sending the DL message to the wireless device 101. Alternatively a GTP Tunnel Endpoint Identifier, TEID, is used to select said data radio bearer or radio connection.

The message is the actual data conveyed between the wireless device 101 and the network server 110.

Transmission between the gateway node 105 and the network server 110 may e normal IP routing.

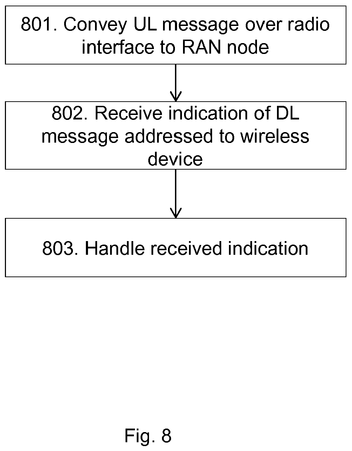

The method described above will now be described seen from the perspective of the wireless device 101. **Figure 8** is a flowchart describing the present method in the wireless device 101 for handling messages in the communications system 100. The method comprises the following steps to be performed by the wireless device 101:

### Step 801

This step corresponds to step 203 in figure 2, step 504 in figure 5, and steps 604a and 607b in figure 6. The wireless device 101 conveys the UL message over a radio interface to the RAN node 103. Conveying may also be seen as transmitting or sending.

### Step 802

This step corresponds to step 210 in figure 2, step 508 in figure 5 and steps 607a and 608b in figure 6. The wireless device 101 receives an indication of the DL message addressed to the wireless device 101. The indication is received from the RAN node 103 as part of radio interface signaling for the UL message. The indication may be for one or more DL messages addressed to the wireless device 101.

The indication of the DL message may have been set by the RAN node 103 or by the gateway node 105. The indication may be at least one of a flag and at least part of the DL message itself. The indication may comprise information indicating sender of the DL message.

The indication of the DL message may be received from the RAN node 103 in one of: an acknowledgement message for an UL message previously transmitted by the wireless device 103, a RAU response message, a TAU response message, or a response to other signaling with a registration node 108.

### Step 803

This step corresponds to step 211 in figure 2, step 509 in figure 5 and steps 608a and 609b in figure 6. In some embodiments, the wireless device 101 handles the received indication. The wireless device 101 may handle the received indication by retrieving at least part of the indicated DL message. The wireless device may handle the received indication by the received indication by establishing a radio bearer in the communications system 100, and communicating using the established radio bearer with a node in which the DL message is comprised.

To perform the method steps shown in figure 8 for handling messages in the communications system 100 the wireless device 101 is arranged to convey the UL message over a radio interface to the RAN node 103. The wireless device 101 is further arranged to receive an indication of the DL message addressed to the wireless device 101. The indication is received from the RAN node 103 as part of radio interface signaling for the UL message.

The wireless device 101 may be further arranged to handle the received indication by retrieving at least part of the indicated DL message.

The wireless device 101 may be further arranged to, when the indication of the DL message has been received, handle the received indication by establishing a radio bearer in the communications system 100. The wireless device 101 may be further arranged to communicate using the established radio bearer with a node in which the DL message is comprised.

The indication of the DL message may have been set by the RAN node 10) or by the gateway node 105.

The indication may be at least one of a flag and at least part of the DL message itself.

The indication may comprise information indicating sender of the DL message.

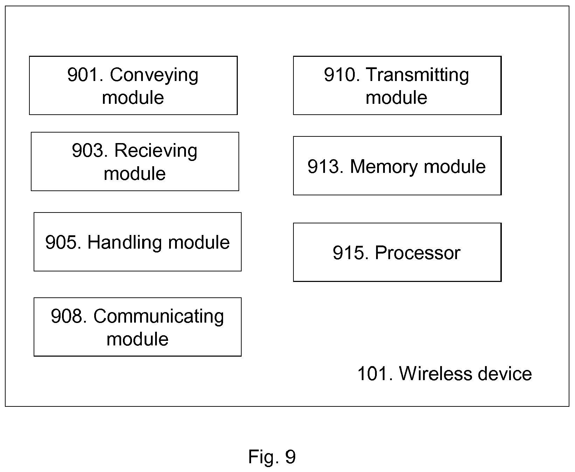

To perform the method steps shown in figure 8 for handling messages in the communications system 100 the wireless device 101 comprises an arrangement as shown in **Figure 9****.**

The wireless device 101 may comprise a **conveying module 901** arranged to convey the UL message over the radio interface the RAN node 103. The conveying module 901 may also be referred to as a conveying unit, a conveying circuit, conveying means or means for conveying.

The wireless device 101 may comprise a **receiving module 903** arranged to receive an indication of DL message addressed to the wireless device 101. The indication is received from the RAN node 103 as part of radio interface signaling for the UL message. The receiving module 903 may also be referred to as a receiving unit, a receiving circuit, receiving means or means for receiving. The receiving module 903 may be a receiver or a transceiver.

The wireless device 101 may comprise a **handling module 905** which is arranged to handle the received indication by retrieving at least part of the indicated DL message. The handling module 905 may be further arranged to, when the indication of the DL message has been received, handle the received indication by establishing a radio bearer in the communications system 100. The handling module 905 may also be referred to as a handling unit, a handling circuit, handling means or means for handling.

The wireless device 101 may comprise a **communicating module 908** arranged to communicate using the established radio bearer with a node in which the DL message is comprised. The communicating module 908 may also be referred to as a communicating unit, a communicating circuit, communicating means or means for communicating.

The indication of the DL message may have been set by the RAN node 103 or by the gateway node 105. The indication may be at least one of a flag and at least part of the DL message itself. The indication may comprise information indicating sender of the DL message.

The wireless device 101 may further comprise a **transmitting module 910** being arranged to transmit messages and other types of suitable information to the other nodes in the communications system 100. The transmitting module 910 may also be referred to as a transmitting unit, a transmitting circuit, transmitting means or means for transmitting. The transmitting module 910 may be a transmitter or a transceiver.

The wireless device 101 may further comprise a **memory module 913** comprising one or more memory units. The memory module 913 is arranged to be used to store data, received data streams, UL and DL messages, threshold values, time periods, configurations, schedulings, and applications to perform the methods herein when being executed in the wireless device 101. The memory module 913 may also be referred to as a memory unit, a memory circuit, memory means or means for storing.

The wireless device 101 may comprise processing means operative to perform the steps of the method in figures 2, 5, 6 and 8. The processing means comprises a **processor 915** and memory module 913. The memory comprises instruction executable by the processor 915.

A computer program product or a computer program may be directly loadable into an internal memory of a digital computer within at least one entity of the wireless device 101 according the above description and figure 9. The computer program product comprises software code portions for performing the method as described above with relation to figure 8 when said product is run on a computer.

A computer program product or a computer program may be stored on a computer usable medium. The computer program product may comprise a computer readable program for causing a computer, within an entity in the wireless device 101 according to the above description of the wireless device 101 and figure 9, to control an execution of the method as described above with relation to figure 8.

Those skilled in the art will also appreciate that the conveying module 901, the receiving module 903, the handling module 905, the communication module 908 and the transmitting module 910 described above may refer to a combination of analog and digital circuits, and/or one or more processors configured with software and/or firmware, e.g. stored in a memory, that when executed by the one or more processors such as the processor 915 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

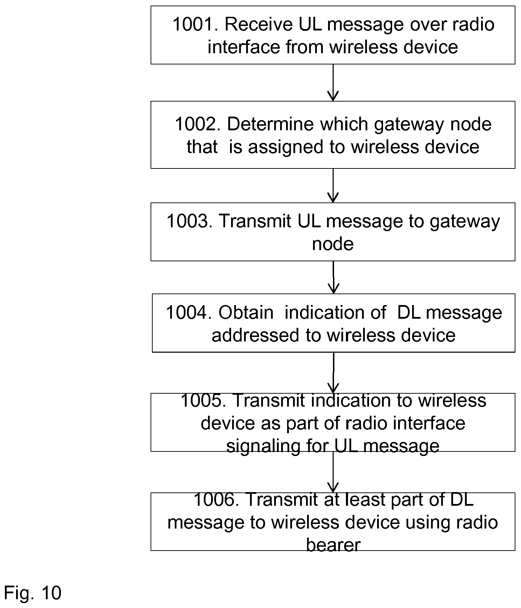

The method described above will now be described seen from the perspective of the RAN node 103. **Figure 10** is a flowchart describing the present method in the RAN node 103 for handling messages in the communications system 100. The method comprises the following steps to be performed by the RAN node 103:

### Step 1001

This step corresponds to step 203 in figure 2, step 504 in figure 5 and steps 604a and 607b in figure 5. The RAN node 103 receives an UL message over a radio interface from a wireless device 101.

### Step 1002

This step corresponds to step 204 in figure 2 and step 505 in figure 5. In some embodiments, the RAN node 103 determines which gateway node that is assigned to the wireless device 101. The determining of which gateway node that is assigned to the wireless device 101 may be performed based on policy-based routing.

### Step 1003

This step corresponds to step 205 in figure 2 and step 505 in figure 5. In some embodiments, the RAN node 103 transmits the UL message to a gateway node 105. The UL message may be transmitted to the determined gateway node 105, i.e. the gateway node determined in step 802.

### Step 1004

This step corresponds to steps 205 and 209 in figure 2 and steps 505 and 507 in figure 5. The RAN node 103 obtains an indication of a DL message addressed to the wireless device 101.

In some embodiments, the indication may be obtained internally within the RAN node 103 itself. In some embodiments, the indication of the DL message is obtained by receiving it from the gateway node 105.

In some embodiments, the indication is at least one of a flag and at least part of the DL message itself. In some embodiments, the indication comprises information indicating sender of the DL message.

### Step 1005

This step corresponds to step 210 in figure 2, step 508 in figure 5 and steps 607a and 608b in figure 6. The RAN node 103 transmits the indication to the wireless device 101 as part of radio interface signaling for the UL message.

The indication of the DL message may be transmitted to the wireless device 101 in one of: an acknowledgement message for an UL message previously transmitted by the wireless device 103, a RAU response message, a TAU response message, or a response to other signaling with a registration node 108.

### Step 1006

This step corresponds to step 211 in figure 2, step 509 in figure 5 and steps 608a and 609b in figure 6. In some embodiments, the RAN node 103 transmits at least part of the DL message to the wireless device 101 using a radio bearer.

To perform the method steps shown in figure 10 for handling messages in the communications system 100 the RAN node 103 is arranged to receive the UL message over the radio interface from a wireless device 101. The RAN node 103 is further arranged to obtain an indication of a DL message addressed to the wireless device 101, and to transmit the indication to the wireless device 101 as part of radio interface signaling for the UL message.

The indication may be obtained internally within the RAN node 103 itself. The indication of the DL message may be obtained by receiving it from the gateway node 105.

The RAN node 103 may be further arranged to transmit the UL message to a gateway node 105.

The RAN node 103 may be further arranged to determine which gateway node that is assigned to the wireless device 101, and the UL message is transmitted to the determined gateway node 105.

The RAN node 103 may be further arranged to determine which gateway node that is assigned to the wireless device 101 based on policy-based routing.

The RAN node 103 may be further arranged to transmit at least part of the DL message to the wireless device 101 using a radio bearer.

The indication may be at least one of a flag and at least part of the DL message itself. The indication may comprise information indicating sender of the DL message.

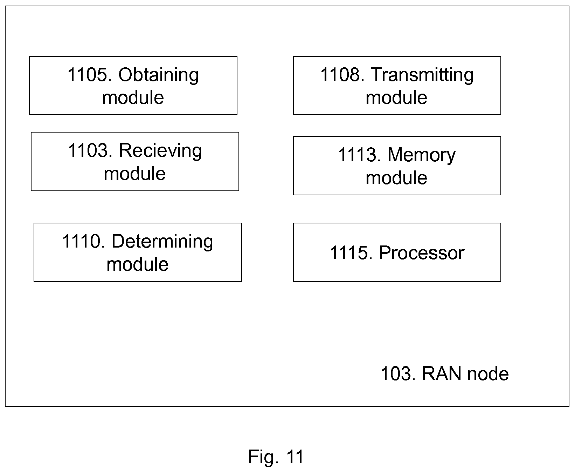

To perform the method steps shown in figure 10 for handling messages in the communications system 100 the RAN node 103 may comprise an arrangement as shown in **Figure 11****.**

The RAN node 103 may comprise a **receiving module 1103** arranged to receive an UL message over a radio interface from a wireless device 101. The receiving module 1103 may also be referred to as a receiving unit, a receiving circuit, receiving means or means for receiving. The receiving module 1103 may be a receiver or a transceiver.

The RAN node 103 may comprise an **obtaining module 1105** arranged to obtain an indication of the DL message addressed to the wireless device 101. The obtaining module 1105 may also be referred to as a obtaining unit, a obtaining circuit, obtaining means or means for obtaining.

The RAN node 103 may comprise a **transmitting module 1108** arranged to transmit the indication to the wireless device 101 as part of radio interface signaling for the UL message. The transmitting module 1108 may be further arranged to transmit the UL message to a gateway node 105. The transmitting module 1108 may be further arranged to transmit at least part of the DL message to the wireless device 101 using a radio bearer. The transmitting module 1108 may also be referred to as a transmitting unit, a transmitting circuit, transmitting means or means for transmitting. The transmitting module 1108 may be a transmitter or a transceiver

The indication may be obtained internally within the RAN node 103 itself. The indication of the DL message may be obtained by receiving it from the gateway node 105.

The RAN node 103 may further comprise a **determining module 1110** arranged to determine which gateway node that is assigned to the wireless device 10. The UL message may be transmitted to the determined gateway node 105. The determining module 1110 may be further arranged to determine which gateway node that is assigned to the wireless device 101 based on policy-based routing. The determining module 1110 may also be referred to as a determining unit, a determining circuit, determining means or means for determining.

The indication may be at least one of a flag and at least part of the DL message itself. The indication may comprise information indicating sender of the DL message.

The RAN node 103 may further comprise a **memory module 1113** comprising one or more memory units. The memory module 1113 is arranged to be used to store data, received data streams, UL and DL messages, threshold values, time periods, configurations, schedulings, and applications to perform the methods herein when being executed in the RAN node 103. The memory module 1113 may also be referred to as a memory unit, a memory circuit, memory means or means for storing.

The RAN node 103 may comprise processing means operative to perform the steps of the method in figures 2, 5, 6 and 10. The processing means comprises a **processor 1115** and memory module 1113. The memory comprises instruction executable by the processor 1115.

Those skilled in the art will also appreciate that the receiving module 1103, the obtaining module 1105, the transmitting module 1108 and the determining module 1110 described above may refer to a combination of analog and digital circuits, and/or one or more processors configured with software and/or firmware, e.g. stored in a memory, that when executed by the one or more processors such as the processor 1115 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

A computer program product or a computer program may be directly loadable into an internal memory of a digital computer within at least one entity of the RAN node 103 according the above description and figure 11. The computer program product comprises software code portions for performing the method as described above with relation to figure 10 when said product is run on a computer.

A computer program product or a computer program may be stored on a computer usable medium. The computer program product may comprise a computer readable program for causing a computer, within an entity in the RAN node 103 according to the above description of the RAN node 103 and figure 11, to control an execution of the method as described above with relation to figure 10.

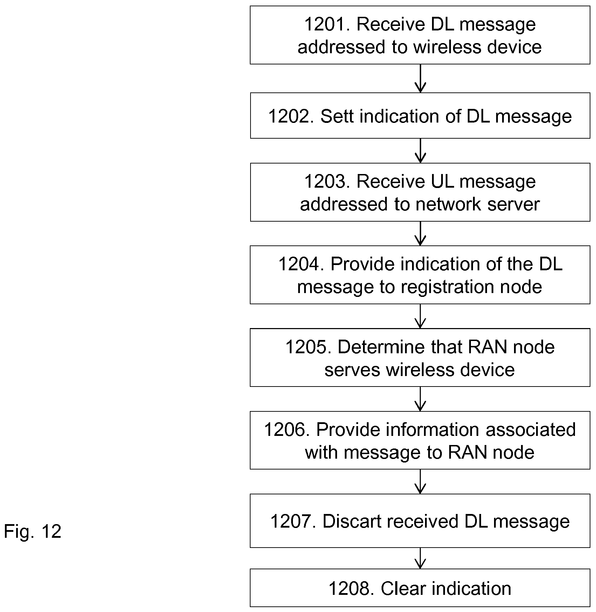

The method described above will now be described seen from the perspective of the gateway node 105. **Figure 12** is a flowchart describing the present method in the gateway node 105 for handling messages in the communications system 100. The method comprises the following steps to be performed by the gateway node 105:

### Step 1201

This step corresponds to step 201 in figure 2, step 501 in figure 5 and steps 601a and 601b in figure 6. In some embodiments, the gateway node 105 receives a DL message addressed to the wireless device 101.

### Step 1202

This step corresponds to step 202 in figure 2, step 502 in figure 5 and steps 602a and 602b in figure 6. In some embodiments, the gateway node 105 sets an indication of the DL message

### Step 1203

This step corresponds to step 205 in figure 2 and step 505 in figure 5. The gateway node 105 receives, from a wireless device 101 via a RAN node 103, an UL message addressed to the network server 110.

### Step 1204

This step corresponds to steps 606a and 604b in figure 6. In some embodiments, the gateway node 105 provides, to the registration node 108, an indication of the DL message addressed to the wireless device 101.

### Step 1205

This step corresponds to step 208 in figure 2. In some embodiments, based on an UL message received from the RAN node 103, the gateway node 105 determines that the RAN node 103 is the RAN node that serves the wireless device 101.

The RAN node 103 may be determined to serve the wireless device 101 when the wireless device 101 is a stationary wireless device or a non-mobile wireless device.

### Step 1206

This step corresponds to step 209 in figure 2 and step 507 in figure 5. The gateway node 105 provides, to the RAN node 103, information associated with a DL message addressed to the wireless device 101.

In some embodiments, the information associated with the DL message provided to the RAN node 103 is at least part of the DL message. In some embodiments, the information associated with the DL message provided to the RAN node 103 is the indication of the DL message addressed to the RAN node 103 (i.e. the indication sat in step 1202).

In some embodiments, the information associated with the DL message is provided to the determined serving RAN node 103, i.e. the RAN node determined in step 1205.

### Step 1207

This step corresponds to step 207 in figure 2. In some embodiments, the gateway node 105 discards the received DL message when the information associated with the DL message has been provided to the RAN node 103.

### Step 1208

This step corresponds to steps 610b and 611b in figure 6. In some embodiments, the gateway node 105 clears the indication as instructed by the registration node 108.

To perform the method steps shown in figure 12 for handling messages in the communications system 100 the gateway node 105 is arranged to receive, from a wireless device 101 via a RAN node 103, an UL, message addressed to a network server 110. The gateway node 105 is further arranged to provide, to the RAN node 103, information associated with a DL message addressed to the wireless device 101.

The information associated with the DL message provided to the RAN node 103 may be at least part of the DL message.

The gateway node 105 may be further arranged to set an indication of the DL message. The information associated with the DL message provided to the RAN node 103 may be the indication of the DL message addressed to the RAN node 103.

The gateway node 105 may be further arranged to receive a DL message addressed to the wireless device 101.

The gateway node 105 may be further arranged to discard the received DL message when the information associated with the DL message has been provided to the RAN node 103.

The gateway node 105 may be further arranged to provide, to a registration node 108 an indication of the DL message addressed to the wireless device 101.

The gateway node 105 may be further arranged to clear the indication as instructed by the registration node 108.

The gateway node 105 may be further arranged to, based on an UL message received from the RAN node 103, determine that the RAN node 103 is the RAN node that serves the wireless device 101. The information associated with the DL message may be provided to the determined serving RAN node 103.

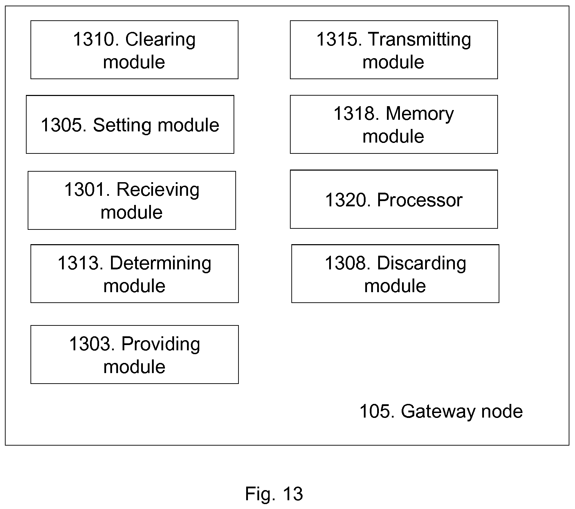

To perform the method steps shown in figure 12 for handling messages in the communications system 100 the gateway node 105 may comprise an arrangement as shown in **Figure 13****.**

The gateway node 105 may comprise a **receiving module 1301** arranged to receive, from a wireless device 101 via a RAN node 103, an UL message addressed to a network server 110.

The receiving module 130 may be further arranged to receive a DL message addressed to the wireless device 101. The receiving module 1310 may also be referred to as a receiving unit, a receiving circuit, receiving means or means for receiving. The receiving module 1301 may be a receiver or a transceiver.

The gateway node 105 may comprise a **providing module 1303** arranged to provide, to a RAN node 103, information associated with a DL message addressed to the wireless device 101. The information associated with the DL message provided to the RAN node 103 may be at least part of the DL message. The providing module 1303 may be further arranged to provide, to a registration node 108, an indication of the DL message addressed to the wireless device 101. The providing module 1303 may also be referred to as a providing unit, a providing circuit, providing means or means for providing.

The gateway node 105 may comprise a **setting module 1305** arranged to set an indication of the DL message. The information associated with the DL message provided to the RAN node 103, possibly by the providing module 1303 described above, may be the indication of the DL message addressed to the RAN node 103. The setting module 1305 may also be referred to as a setting unit, a setting circuit, setting means or means for setting.

The gateway node 105 may comprise a **discarding module 1308** arranged to discard the received DL message when the information associated with the DL message has been provided to the RAN node 103. The discarding module 1308 may also be referred to as a discarding unit, a discarding circuit, discarding means or means for discarding.

The gateway node 105 may further comprise a **clearing module 1310** arranged to clear the indication as instructed by the registration node 108. The clearing module 1310 may also be referred to as a clearing unit, a clearing circuit, clearing means or means for clearing.

The gateway node 105 may further comprise a **determining module 1313** which is arranged to, based on an UL message received from the RAN node 103, determine that the RAN node 103 is the RAN node that serves the wireless device 101. The information associated with the DL message is provided to the determined serving RAN node 103. The determining module 1313 may also be referred to as a determining unit, a determining circuit, determining means or means for determining.

The gateway node 105 may further comprise a **transmitting module 1315** arranged to transmit messages, UL and DL, to the other nodes in the communications system 100. The transmitting module 1315 may also be referred to as a transmitting unit, a transmitting circuit, transmitting means or means for transmitting. The transmitting module 1315 may be a transmitter or a transceiver.

The gateway node 105 may further comprise a **memory module 1318** comprising one or more memory units. The memory module 1318 is arranged to be used to store data, received data streams, UL and DL messages, threshold values, time periods, configurations, schedulings, and applications to perform the methods herein when being executed in the gateway node 105. The memory module 1318 may also be referred to as a memory unit, a memory circuit, memory means or means for storing.

The gateway node 105 may comprise processing means operative to perform the steps of the method in figures 2, 5, 6 and 12. The processing means comprises a **processor 1320** and memory module 1318. The memory comprises instruction executable by the processor 1320.

The gateway node 105 may be one of: a standalone node, a combined gateway node 105 and registration node 108, a Packet Data Network-GateWay, PDN-GW, a Serving GateWay, SGW, a Gateway General packet radio service Support Node, GGSN, a Mobility Management Entity, MME, a Serving General packet radio service Support Node, SGSN, and a combined MME and SGSN node.

Those skilled in the art will also appreciate that the receiving module 1301, the providing module 1303, the setting module 1305, the discarding module 1308, the clearing module 1310, the determining module 1313 and the transmitting module 1315 the described above may refer to a combination of analog and digital circuits, and/or one or more processors configured with software and/or firmware, e.g. stored in a memory, that when executed by the one or more processors such as the processor 1320 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

A computer program product or a computer program may be directly loadable into an internal memory of a digital computer within at least one entity of the gateway node 105 according the above description and figure 13. The computer program product comprises software code portions for performing the method as described above with relation to figure 12 when said product is run on a computer.

A computer program product or a computer program may be stored on a computer usable medium. The computer program product may comprise a computer readable program for causing a computer, within an entity in the gateway node 105 according to the above description of the gateway node 105 and figure 13, to control an execution of the method as described above with relation to figure 12.

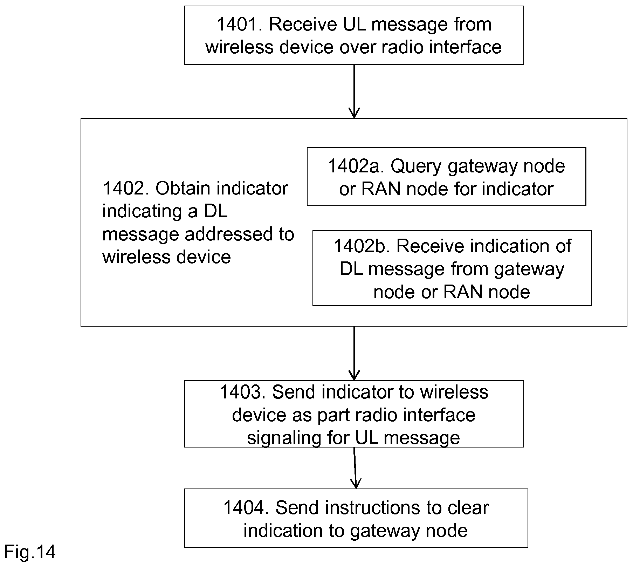

The method described above will now be described seen from the perspective of the registration node 108. **Figure 14** is a flowchart describing the present method in the registration node 108 for handling messages in the communications system 100. The method comprises the following steps, which steps may be performed in any suitable order than described below:

### Step 1401

This step corresponds to steps 604a and 607b in figure 6. The registration node 108 receives an UL message from the wireless device 101 over the radio interface.

### Step 1402

This step corresponds to steps 605a, 606a and 604b in figure 6. The registration node obtains an indicator indicating the DL message addressed to the wireless device 101.

### Step 1402a

This step corresponds to step 605a in figure 6. This step is a substep of step 1402. In some embodiments, the registration node 108 queries the gateway node 105 or the RAN node 103 for the indicator indicating the DL message addressed to the wireless device 101.

### Step 1402b

This step corresponds to steps 606a and 604b in figure 6. This is a substep of step 1402 and a step performed instead of step 1402a or in addition to and after step 1402a. In some embodiments, the registration node 108 receives the indication of the DL message from the gateway node 105 or the RAN node 103.

### Step 1403

This step corresponds to steps 607a and 608b in figure 6. The registration node 108 sends the indicator to the wireless device 101 as part radio interface signaling for the UL message.

### Step 1404

This step corresponds to step 610b. In some embodiments, the registration node 108 sends instructions to clear the indication to the gateway node 105.

To perform the method steps shown in figure 14 for handling messages in the communications system 100 the registration node 108 is arranged to receive an UL message from a wireless device 101 over a radio interface and to obtain an indicator indicating a DL message addressed to the wireless device 101. The registration node 108 is further arranged to send the indicator to the wireless device 101 as part radio interface signaling for the UL message.

The registration node 108 may be further arranged to query a gateway node 105 or a RAN node 103 for the indicator indicating the DL message addressed to the wireless device 101.

The registration node 108 may be further arranged to receive the indication of the DL message from a gateway node 105 or a RAN node 103.

The registration node 108 may be further arranged to send instructions to clear the indication to the gateway node 105.

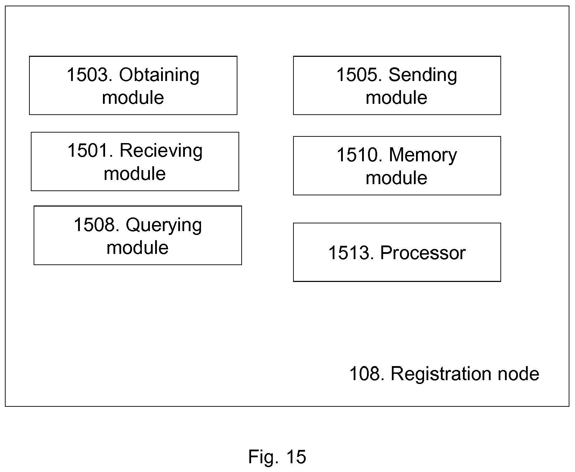

To perform the method steps shown in figure 14 for handling messages in the communications system 100 the registration node 108 may comprise an arrangement as shown in **Figure 15****.**

The registration node 108 may comprise a **receiving module 1501** arranged to receive an UL message from a wireless device 101 over a radio interface. The receiving module 1501 may be further arranged to receive the indication of the DL message from a gateway node 105 or a RAN node 103. The receiving module 1501 may also be referred to as a receiving unit, a receiving circuit, receiving means or means for receiving. The receiving module 1501 may be a receiver or a transceiver.

The registration node 108 may comprise an **obtaining module 1503** arranged to obtain an indicator indicating a DL message addressed to the wireless device 101. The obtaining module 1503 may also be referred to as a obtaining unit, a obtaining circuit, obtaining means or means for obtaining.

The registration node 108 may comprise a **sending module 1505** arranged to send the indicator to the wireless device 101 as part radio interface signaling for the UL message. The sending module 1505 may be further arranged to send instructions to clear the indication to the gateway node 105. The sending module 1505 may also be referred to as a sending unit, a transmitting unit, a sending circuit, sending means or means for sending. The sending module 1505 may be a transmitter or a transceiver.

The registration node 108 may comprise a **querying module 1508** which is arranged to query a gateway node 105 or a RAN node 103 for the indicator indicating the DL message addressed to the wireless device 101. The querying module 1508 may also be referred to as a querying unit, a querying circuit, querying means or means for querying.

The registration node 108 may further comprise a **memory module 1510** comprising one or more memory units. The memory module 1318 is arranged to be used to store data, received data streams, UL and DL messages, threshold values, time periods, configurations, schedulings, and applications to perform the methods herein when being executed in the gateway node 105. The memory module 1318 may also be referred to as a memory unit, a memory circuit, memory means or means for storing.

The registration node 108 may comprise processing means operative to perform the steps of the method in figures 2, 5, 6 and 14. The processing means comprises a **processor 1513** and memory module 1510. The memory comprises instruction executable by the processor 1513.

Those skilled in the art will also appreciate that the receiving module 1501, the obtaining module 1503, the sending module 1505 and the querying module 1508 described above may refer to a combination of analog and digital circuits, and/or one or more processors configured with software and/or firmware, e.g. stored in a memory, that when executed by the one or more processors such as the processor 915 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

The registration node 108 may be one of: a standalone node, a combined registration node 108 and a gateway node 105, a Mobility Management Entity, MME, a Serving General packet radio service Support Node, SGSN, and a combined MME and SGSN node.

A computer program product or a computer program which may be directly loadable into an internal memory of a digital computer within at least one entity of the registration node 108 according the above description and figure 15. The computer program product comprises software code portions for performing the method as described above with relation to figure 14 when said product is run on a computer.

A computer program product or a computer program may be stored on a computer usable medium. The computer program product may comprise a computer readable program for causing a computer, within an entity in the registration node 108 according to the above description of the registration node 108 and figure 15, to control an execution of the method as described above with relation to figure 14.

The present mechanism for handling messages in a communications system 100 may be implemented through one or more processors, such as a processor 915 in wireless device arrangement depicted in Figure 9, a processor 115 in the RAN node arrangement depicted in figure 11, a processor 1320 in the gateway node arrangement depicted in figure 13 and a processor 1513 in the registration node arrangement depicted in Figure 15, together with computer program code for performing the functions of the embodiments herein. The processor may be for example a Digital Signal Processor (DSP), Application Specific Integrated Circuit (ASIC) processor, Field-programmable gate array (FPGA) processor or micro processor. The program code mentioned above may also be provided as a computer program product, for instance in the form of a data carrier carrying computer program code for performing the embodiments herein when being loaded into the at least one of the wireless device 101, the RAN node 103, the gateway node 150 and the registration node 108. One such carrier may be in the form of a CD ROM disc. It is however feasible with other data carriers such as a memory stick. The computer program code can furthermore be provided as pure program code on a server and downloaded to at least one of the wireless device 101, the RAN node 103, the gateway node 150 and the registration node 108.

Summarized, the embodiments herein propose a new architecture principle for LTE & EPC meeting loT requirements for this type of wireless devices 101. The architecture principles are particularly useful for narrow-band MTC communication. The embodiments herein may also be described as relating to Message Forwarding as path discovery for an indicator of a DL Message in EPS Networks. The embodiments herein support UL message forwarding in a very resource efficient manner without the need for any bearer establishment. It may use Policy-Based Routing based on the source IP address of the wireless device 101.

For DL message forwarding, the embodiments herein support passing an indication of the DL message to the wireless device 101. This indication may be seen as being much more resource efficient than normal paging, but has a longer response delay than paging. When the wireless device 101 receives the indication it may establishes normal LTE/EPC bearers and starts bidirectional communication with its network server. The wireless device 101 may also save more power by not having to listen to the paging channel and stay in a power saving mode for longer times.

The indicator of the DL message may be passed to the wireless device 101 when UL messages are acknowledged or when the wireless device 101 makes a regular RAU/TAU signaling (periodic RAU/TAU or at RA/TA change at mobility).

The embodiments herein may be applied on any radio access, such as e.g. LTE and WCDMA/HSPA accesses.

The embodiments herein are not limited to the above described embodiments. Various alternatives, and modifications may be used. Therefore, the above embodiments should not be taken as limiting the scope of the embodiments, which is defined by the appending claims.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

The term "configured to" used herein may also be referred to as "arranged to" or "adapted to".

It should also be emphasised that the steps of the methods defined in the appended claims may, without departing from the embodiments herein, be performed in another order than the order in which they appear in the claims.

## Claims

1. A method in a wireless device (101) for handling messages in a communications system (100), wherein the wireless device (101) is arranged to send small amounts of data, the method comprising:
*conveying* (203, 504, 604a, 607b, 801) an UpLink, UL, message over a radio interface to a Radio Access Network, RAN, node (103);
*receiving* (210, 508, 607a, 608b, 802) a response to the UL message from the RAN node (103), wherein the response comprises a message waiting indication of a DownLink, DL, message addressed and waiting to be transmitted to the wireless device (101), wherein the message waiting indication is received from the RAN node (103) as part of radio interface signaling for the UL message and not using a radio bearer; and
when the message waiting indication of the DL message has been received, *handling* (211, 803) the received indication by establishing a radio bearer in the communications system (100); and retrieving at least part of the waiting DL message from a node where the DL message has been stored via the established radio bearer.

2. The method according to claim 1, further comprising:
*handling* (509, 608a, 609b, 803), the received indication by retrieving at least part of the indicated DL message.

3. The method according to any one of claims 1-2, wherein the indication of the DL message has been set (202, 502, 602a, 602b) by the RAN node (103) or by a gateway node (105).

4. The method according to any one of claims 1-3, wherein the indication is at least one of a flag and at least part of the DL message itself.

5. A method in a Radio Access Network, RAN, node (103) for handling messages in a communications system (100), the method comprising:
*receiving* (203, 504, 604a, 607b, 1001) an UpLink, UL, message over a radio interface from a wireless device (101), wherein the wireless device (101) is arranged to send small amounts of data;
*obtaining* (205, 209, 505, 507, 1004) a message waiting indication of a DownLink, DL, message addressed to the wireless device (101) and waiting to be transmitted to the wireless device (101);
*transmitting* (210, 508, 607a, 608b, 1005) a response to the UL message to the wireless device (101), wherein the response comprises the message waiting indication to the wireless device (101) as part of radio interface signaling for the UL message and not using a radio bearer; and
*transmitting* (211, 509, 608a, 609b, 1006) at least part of the DL message to the wireless device (101) using a radio bearer.

6. The method according to claim 5, wherein the indication is obtained internally within the RAN node (103) itself.

7. The method according to claim 5, wherein the indication of the DL message is obtained by receiving it from the gateway node (105).

8. The method according to any one of claims 5-7, further comprising:
*transmitting* (205, 505, 1003) the UL message to a gateway node (105).

9. The method according to claim 8, further comprising:
*determining* (204, 505, 1002) which gateway node that is assigned to the wireless device (101); and wherein the UL message is transmitted to the determined gateway node (105).

10. The method according to claim 9, wherein the determining (204) of which gateway node that is assigned to the wireless device (101) is performed based on policy-based routing.

11. The method according to any one of claims 5-10, wherein the indication is at least one of a flag and at least part of the DL message itself.

12. A method in a gateway node (105) for handling messages in a communications system (100), the method comprising:
*receiving* (205, 505, 1203), from a wireless device (101) via a Radio Access Network, RAN, node (103), an UpLink, UL, message addressed to a network server (110), wherein the wireless device (101) is arranged to send small amounts of data;
*providing* (209, 507, 1206), to a Radio Access Network, RAN, node (103), information associated with a DownLink, DL, message addressed to the wireless device (101); and
*setting* (202, 502, 602a, 602b, 1202) a message waiting indication of the DL message addressed and waiting to be transmitted to the wireless device (101); and
wherein the information associated with the DL message provided to the RAN node (103) is the indication of the DL message addressed to the RAN node (103).

13. The method according to claim 12, wherein the information associated with the DL message provided to the RAN node (103) is at least part of the DL message.

14. The method according to any one of claims 12-13, further comprising:
*receiving* (201, 501, 601a, 601b, 1201) a DownLink, DL, message addressed to the wireless device (101).

15. The method according to claim 14, further comprising:
*discarding* (207, 1207) the received DL message when the information associated with the DL message has been provided to the RAN node (103).

16. The method according to any one of claims 12-15, further comprising:
*providing* (606a, 604b, 1204), to a registration node (108) an indication of the DL message addressed to the wireless device (101).

17. The method according to claim 16, further comprising:
*clearing* (610b, 611b, 1208) the indication as instructed by the registration node (108).

18. The method according to any one of claims 12-17, further comprising:
based on an UL message received from the RAN node (103), *determining* (208, 1205) that the RAN node (103) is the RAN node that serves the wireless device (101);
wherein the information associated with the DL message is provided to the determined serving RAN node (103).

19. A wireless device (101) for handling messages in a communications system (100), wherein the wireless device (101) is arranged to send small amounts of data, the wireless device (101) being arranged to:
convey an UpLink, UL, message over a radio interface to a Radio Access Network, RAN, node (103);
receive a response to the UL message from the RAN node (103), wherein the response comprises a message waiting indication of a DownLink, DL, message addressed to and waiting to be transmitted to the wireless device (101), wherein the indication is received from the RAN node (103) as part of radio interface signaling for the UL message and not using a radio bearer; and to
when the indication of the DL message has been received, handle the received indication by establishing a radio bearer in the communications system (100); and to
retrieving at least part of the waiting DL message from a node where the DL message has been stored via the established radio bearer.

20. The wireless device (101) according to claim 19, being further arranged to *handle* the received indication by retrieving at least part of the indicated DL message.

21. The wireless device (101) according to any one of claims 19-20, wherein the indication of the DL message has been set (202, 502, 602a, 602b) by the RAN node (103) or by a gateway node (105).

22. The wireless device (101) according to any one of claims 19-21, wherein the indication is at least one of a flag and at least part of the DL message itself.

23. A Radio Access Network, RAN, node (103) for handling messages in a communications system (100), the RAN node (103) being arranged to:
*receive* an UpLink, UL, message over a radio interface from a wireless device (101), wherein the wireless device (101) is arranged to send small amounts of data;
*obtain* a message waiting indication of a DownLink, DL, message addressed to and waiting to be transmitted to the wireless device (101);
*transmit* a response to the UL message to the wireless device (101), wherein the response comprises the message waiting indication to the wireless device (101) as part of radio interface signaling for the UL message and not using a radio barer; and to
transmit at least part of the DL message to the wireless device (101) using a radio bearer.

24. The RAN node (103) according to claim 23, wherein the indication is obtained internally within the RAN node (103) itself.

25. The RAN node (103) according to claim 23, wherein the indication of the DL message is obtained by receiving it from the gateway node (105).

26. The RAN node (103) according to any one of claims 23-25, being further arranged to transmit the UL message to a gateway node (105).

27. The RAN node (103) according to claim 26, being further arranged to determine which gateway node that is assigned to the wireless device (101); and wherein the UL message is transmitted to the determined gateway node (105).

28. The RAN node (103) according to claim 27, being further arranged to determine which gateway node that is assigned to the wireless device (101) based on policy-based routing.

29. The RAN node (103) according to any one of claims 23-28, wherein the indication is at least one of a flag and at least part of the DL message itself.

30. A gateway node (105) for handling messages in a communications system (100), the gateway node (105) being arranged to:
receive, from a wireless device (101) via a Radio Access Network, RAN, node (103), an UpLink, UL, message addressed to a network server (110), wherein the wireless device (101) is arranged to send small amounts of data;
provide, to a Radio Access Network, RAN, node (103), information associated with a DownLink, DL, message addressed to the wireless device (101); and to
set a message waiting indication of the DL message addressed and waiting to be transmitted to the wireless device (101); and wherein the information associated with the DL message provided to the RAN node (103) is the indication of the DL message addressed to the RAN node (103).

31. The gateway node (105) according to claim 30, wherein the information associated with the DL message provided to the RAN node (103) is at least part of the DL message.

32. The gateway node (105) according to any one of claims 30-31, being further arranged to receive a DownLink, DL, message addressed to the wireless device (101).

33. The gateway node (105) according to claim 32, being further arranged to discard the received DL message when the information associated with the DL message has been provided to the RAN node (103).

34. The gateway node (105) according to any one of claims 30-33, being further arranged to provide, to a registration node (108) an indication of the DL message addressed to the wireless device (101).

35. The gateway node (105) according to claim 34, being further arranged to clear the indication as instructed by the registration node (108).

36. The gateway node (105) according to any one of claims 30-35, being further arranged to, based on an UL message received from the RAN node (103), determine that the RAN node (103) is the RAN node that serves the wireless device (101);
wherein the information associated with the DL message is provided to the determined serving RAN node (103).

37. A computer program product stored on a computer usable medium, wherein the computer program product comprises a computer readable program for causing a computer, within an entity in the wireless device (101) according to any one of claims 19-22, to control an execution of the method according to any one of the claims 1-4.

38. A computer program product stored on a computer usable medium, wherein the computer program product comprises a computer readable program for causing a computer, within an entity in the RAN node (103) according to any one of claims 23-29, to control an execution of the method according to any one of the claims 5-11.

39. A computer program product stored on a computer usable medium, wherein the computer program product comprises a computer readable program for causing a computer, within an entity in the gateway node (105) according to any one of claims 30-36, to control an execution of the method according to any one of the claims 12-18.

## Patentansprüche

1. Verfahren in einem drahtlosen Gerät (101) zum Handhaben von Nachrichten in einem Kommunikationssystem (100), wobei das drahtlose Gerät (101) angeordnet ist, kleine Datenmengen zu senden, wobei das Verfahren umfasst:
*Übermitteln* (203, 504, 604a, 607b, 801) einer UpLink, UL, Nachricht über eine Funkschnittstelle an einen Funkzugangsnetzwerk (Radio Access Network), RAN, Knoten (103);
*Empfangen* (210, 508, 607a, 608b, 802) einer Antwort auf die UL-Nachricht von dem RAN-Knoten (103), wobei die Antwort eine Nachrichtwarteangabe einer DownLink, DL, Nachricht umfasst, die an das drahtlose Gerät (101) adressiert ist und darauf wartet, gesendet zu werden, wobei die Nachrichtwarteangabe von dem RAN-Knoten (103) als Teil der Funkschnittstellensignalgebung für die UL-Nachricht und nicht unter Verwendung eines Funkträgers empfangen wird; und
wenn die Nachrichtwarteangabe der DL-Nachricht empfangen wurde, *Handhaben* (211, 803) der empfangenen Angabe durch Herstellen eines Funkträgers in dem Kommunikationssystem (100); und Abrufen zumindest eines Teils der wartenden DL-Nachricht von einem Knoten, an dem die DL-Nachricht über den hergestellten Funkträger gespeichert wurde.

2. Verfahren nach Anspruch 1, weiter umfassend:
*Handhaben* (509, 608a, 609b, 803) der empfangenen Angabe durch Abrufen zumindest eines Teils der angegebenen DL-Nachricht.

3. Verfahren nach einem der Ansprüche 1-2, wobei die Angabe der DL-Nachricht von dem RAN-Knoten (103) oder von einem Gateway-Knoten (105) festgelegt (202, 502, 602a, 602b) wurde.

4. Verfahren nach einem der Ansprüche 1-3, wobei die Angabe zumindest ein Flag und zumindest Teil der DL-Nachricht selbst ist.

5. Verfahren in einem Funkzugangsnetzwerk (Radio Access Network), RAN, Knoten (103) zur Handhabung von Nachrichten in einem Kommunikationssystem (100), wobei das Verfahren umfasst:
*Empfangen* (203, 504, 604a, 607b, 1001) einer UpLink, UL, Nachricht über eine Funkschnittstelle von einem drahtlosen Gerät (101), wobei das drahtlose Gerät (101) angeordnet ist, kleine Datenmengen zu senden;
*Erhalten* (205, 209, 505, 507, 1004) einer Nachrichtwarteangabe einer DownLink, DL, Nachricht, die an das drahtlose Gerät (101) adressiert ist und darauf wartet, an das drahtlose Gerät (101) gesendet zu werden;
*Senden* (210, 508, 607a, 608b, 1005) einer Antwort auf die UL-Nachricht an das drahtlose Gerät (101) wobei die Antwort die Nachrichtwarteangabe an das drahtlose Gerät (101) als Teil der Funkschnittstellensignalgebung für die UL-Nachricht und nicht die Verwendung eines Funkträgers umfasst; und
*Senden* (211, 509, 608a, 609b, 1006) zumindest eines Teils der DL-Nachricht an das drahtlose Gerät (101) unter Verwendung eines Funkträgers.

6. Verfahren nach Anspruch 5, wobei die Angabe intern innerhalb des RAN-Knotens (103) selbst erhalten wird.

7. Verfahren nach Anspruch 5, wobei die Angabe der DL-Nachricht durch ihr Empfangen von dem Gateway-Knoten (105) erhalten wird.

8. Verfahren nach einem der Ansprüche 5-7, weiter umfassend:
*Senden* (205, 505, 1003) der UL-Nachricht an einen Gateway-Knoten (105).

9. Verfahren nach Anspruch 8, weiter umfassend:
*Bestimmen* (204, 505, 1002), welcher Gateway-Knoten, der dem drahtlosen Gerät (101) zugewiesen ist; und wobei die UL-Nachricht an den bestimmten Gateway-Knoten (105) gesendet wird.

10. Verfahren nach Anspruch 9, wobei das Bestimmen (204), welcher Gateway-Knoten, der dem drahtlosen Gerät (101) zugewiesen ist, auf Basis richtlinienbasierten Routings durchgeführt wird.

11. Verfahren nach einem der Ansprüche 5-10, wobei die Angabe zumindest ein Flag und zumindest Teil der DL-Nachricht selbst ist.

12. Verfahren in einem Gateway-Knoten (105) zum Handhaben von Nachrichten in einem Kommunikationssystem (100), wobei das Verfahren umfasst:
*Empfangen* (205, 505, 1203), von einem drahtlosen Gerät (101) über einen Funkzugangsnetzwerk (Radio Access Network), RAN, Knoten (103), einer UpLink, UL, Nachricht, die an einen Netzwerkserver (110) adressiert ist, wobei das drahtlose Gerät (101) angeordnet ist, kleine Datenmengen zu senden;
*Bereitstellen* (209, 507, 1206), an einen Funkzugangsnetzwerk (Radio Access Network), RAN, Knoten (103), von Informationen, die einer DownLink, DL, Nachricht zugeordnet sind, die an das drahtlose Gerät (101) adressiert sind; und
*Festlegen* (202, 502, 602a, 602b, 1202) einer Nachrichtwarteangabe der DL-Nachricht, die an das drahtlose Gerät (101) adressiert ist und darauf wartet, an sie gesendet zu werden; und wobei die Informationen, die der DL-Nachricht zugeordnet sind, die dem RAN-Knoten (103) bereitgestellt wird, die Angabe der DL-Nachricht sind, die an den RAN-Knoten (103) adressiert sind.

13. Verfahren nach Anspruch 12, wobei die Informationen, die der DL-Nachricht zugeordnet sind, die dem RAN-Knoten (103) bereitgestellt wird, zumindest Teil der DL-Nachricht sind.

14. Verfahren nach einem der Ansprüche 12-13, weiter umfassend:
*Empfangen* (201, 501, 601a, 601b, 1201) einer DownLink, DL, Nachricht, die an das drahtlose Gerät (101) adressiert ist.

15. Verfahren nach Anspruch 14, weiter umfassend:
*Verwerfen* (207, 1207) der empfangenen DL-Nachricht, wenn die Informationen, die der DL-Nachricht zugeordnet sind, dem RAN-Knoten (103) bereitgestellt wurden.

16. Verfahren nach einem der Ansprüche 12-15, weiter umfassend:
*Bereitstellen* (606a, 604b, 1204), an einen Registrierungsknoten (108), einer Angabe der DL-Nachricht, die an das drahtlose Gerät (101) adressiert ist.

17. Verfahren nach Anspruch 16, weiter umfassend:
*Löschen* (610b, 611b, 1208) der Angabe, wie von dem Registrierungsknoten (108) angewiesen.

18. Verfahren nach einem der Ansprüche 12-17, weiter umfassend:
basierend auf einer UL-Nachricht, die von dem RAN-Knoten (103) empfangen wurde, *Bestimmen* (208, 1205), dass der RAN-Knoten (103) der RAN-Knoten ist, der das drahtlose Gerät (101) bedient;
wobei die Informationen, die der DL-Nachricht zugeordnet sind, den bestimmten, bedienenden RAN-Knoten (103) bereitgestellt werden.

19. Drahtloses Gerät (101) zum Handhaben von Nachrichten in einem Kommunikationssystem (100), wobei das drahtlose Gerät (101) angeordnet ist, kleine Datenmengen zu senden, wobei das drahtlose Gerät (101) angeordnet ist:
eine UpLink, UL, Nachricht über eine Funkschnittstelle an einen Funkzugangsnetzwerk (Radio Access Network), RAN, Knoten (103) zu übermitteln;
eine Antwort auf die UL-Nachricht von dem RAN-Knoten (103) zu empfangen, wobei die Antwort eine Nachrichtwarteangabe einer DownLink, DL, Nachricht umfasst, die an das drahtlose Gerät (101) adressiert ist und darauf wartet, gesendet zu werden, wobei die Angabe von dem RAN-Knoten (103) als Teil der Funkschnittstellensignalgebung für die UL-Nachricht und nicht unter Verwendung eines Funkträgers empfangen wird; und
wenn die Angabe der DL-Nachricht empfangen wurde, die empfangene Angabe durch Herstellen eines Funkträgers in dem Kommunikationssystem (100) zu handhaben; und
zumindest Teil der wartenden DL-Nachricht von einem Knoten abzurufen, an dem die DL-Nachricht über den hergestellten Funkträger gespeichert wurde.

20. Drahtloses Gerät (101) nach Anspruch 19, weiter angeordnet, um die empfangene Angabe durch Abrufen mindestens eines Teils der angegebenen DL-Nachricht zu *handhaben.*

21. Drahtloses Gerät (101) nach einem der Ansprüche 19-20, wobei die Angabe der DL-Nachricht von dem RAN-Knoten (103) oder von einem Gateway-Knoten (105) festgelegt (202, 502, 602a, 602b) wurde.

22. Drahtloses Gerät (101) nach einem der Ansprüche 19-21, wobei die Angabe zumindest ein Flag und zumindest Teil der DL-Nachricht selbst ist.

23. Funkzugangsnetzwerk (Radio Access Network), RAN, Knoten (103) zum Handhaben von Nachrichten in einem Kommunikationssystem (100), wobei der RAN-Knoten (103) angeordnet ist für:
*Empfangen* einer UpLink, UL, Nachricht über eine Funkschnittstelle von einem drahtlosen Gerät (101), wobei das drahtlose Gerät (101) angeordnet ist, kleine Datenmengen zu senden;
*Erhalten* einer Nachrichtwarteangabe einer DownLink, DL, Nachricht, die an das drahtlose Gerät (101) adressiert ist und darauf wartet, an das drahtlose Gerät (101) gesendet zu werden;
*Senden* einer Antwort auf die UL-Nachricht an das drahtlose Gerät (101), wobei die Antwort die Nachrichtwarteangabe an das drahtlose Gerät (101) als Teil der Funkschnittstellensignalgebung für die UL-Nachricht und nicht unter Verwendung eines Funkträgers umfasst; und
Senden zumindest eines Teils der DL-Nachricht an das drahtlose Gerät (101) unter Verwendung eines Funkträgers.

24. RAN-Knoten (103) nach Anspruch 23, wobei die Angabe intern innerhalb des RAN-Knotens (103) selbst erhalten wird.

25. RAN-Knoten (103) nach Anspruch 23, wobei die Angabe der DL-Nachricht durch ihr Empfangen von dem Gateway-Knoten (105) erhalten wird.

26. RAN-Knoten (103) nach einem der Ansprüche 23-25, weiter angeordnet, die UL-Nachricht an einen Gateway-Knoten (105) zu senden.

27. RAN-Knoten (103) nach Anspruch 26, weiter angeordnet zu bestimmen, welcher Gateway-Knoten, der dem drahtlosen Gerät (101) zugewiesen ist; und wobei die UL-Nachricht an den bestimmten Gateway-Knoten (105) gesendet wird.

28. RAN-Knoten (103) nach Anspruch 27, weiter angeordnet, zu bestimmen, welcher Gateway-Knoten, der dem drahtlosen Gerät (101) zugewiesen ist, auf Basis richtlinienbasierten Routings durchgeführt wird.

29. RAN-Knoten (103) nach einem der Ansprüche 23-28, wobei die Angabe zumindest ein Flag und zumindest Teil der DL-Nachricht selbst ist.

30. Gateway-Knoten (105) zum Handhaben von Nachrichten in einem Kommunikationssystem (100), wobei der Gateway-Knoten (105) angeordnet ist für:
Empfangen, von einem drahtlosen Gerät (101) über einen Funkzugangsnetzwerk (Radio Access Network), RAN, Knoten (103), einer UpLink, UL, Nachricht, die an einen Netzwerkserver (110) adressiert ist, wobei das drahtlose Gerät (101) angeordnet ist, kleine Datenmengen zu senden;
Bereitstellen, an einen Funkzugangsnetzwerk (Radio Access Network), RAN, Knoten (103), von Informationen, die einer DownLink, DL, Nachricht zugeordnet sind, die an das drahtlose Gerät (101) adressiert sind; und
Festlegen einer Nachrichtwarteangabe der DL-Nachricht, die an das drahtlose Gerät (101) adressiert ist und darauf wartet, an sie gesendet zu werden; und wobei die Informationen, die der DL-Nachricht zugeordnet sind, die dem RAN-Knoten (103) bereitgestellt wird, die Angabe der DL-Nachricht sind, die an den RAN-Knoten (103) adressiert sind.

31. Gateway-Knoten (105) nach Anspruch 30, wobei die Informationen, die der DL-Nachricht zugeordnet sind, die dem RAN-Knoten (103) bereitgestellt wird, zumindest Teil der DL-Nachricht sind.

32. Gateway-Knoten (105) nach einem der Ansprüche 30-31, weiter angeordnet, eine DownLink, DL, Nachricht zu empfangen, die an das drahtlose Gerät (101) adressiert ist.

33. Gateway-Knoten (105) nach Anspruch 32, weiter angeordnet, die empfangene DL-Nachricht zu verwerfen, wenn die Informationen, die der DL-Nachricht zugeordnet sind, dem RAN-Knoten (103) bereitgestellt wurden.

34. Gateway-Knoten (105) nach einem der Ansprüche 30-33, weiter angeordnet, einem Registrierungsknoten (108) eine Angabe der DL-Nachricht bereitzustellen, die an das drahtlose Gerät (101) adressiert ist.

35. Gateway-Knoten (105) nach Anspruch 34, weiter angeordnet, die Angabe wie von dem Registrierungsknoten (108) angewiesen zu löschen.

36. Gateway-Knoten (105) nach einem der Ansprüche 30-35, weiter angeordnet, basierend auf einer UL-Nachricht, die von dem RAN-Knoten (103) empfangen wurde, zu bestimmen, dass der RAN-Knoten (103) der RAN-Knoten ist, der das drahtlose Gerät (101) bedient;
wobei die Informationen, die der DL-Nachricht zugeordnet sind, dem bestimmten bedienenden RAN-Knoten (103) bereitgestellt werden.

37. Rechnerprogrammprodukt, das auf einem rechnerverwendbaren Medium gespeichert ist, wobei das Rechnerprogrammprodukt ein rechnerlesbares Programm umfasst, um einen Rechner zu veranlassen, innerhalb einer Entität in dem drahtlosen Gerät (101) nach einem der Ansprüche 19-22, eine Ausführung des Verfahrens nach einem der Ansprüche 1-4 zu steuern.

38. Rechnerprogrammprodukt, das auf einem rechnerverwendbaren Medium gespeichert ist, wobei das Rechnerprogrammprodukt ein rechnerlesbares Programm umfasst, um einen Rechner zu veranlassen, innerhalb einer Entität in dem RAN-Knoten (103) nach einem der Ansprüche 23-29 eine Ausführung des Verfahrens nach einem der Ansprüche 5-11 zu steuern.

39. Rechnerprogrammprodukt, das auf einem rechnerverwendbaren Medium gespeichert ist, wobei das Rechnerprogrammprodukt ein rechnerlesbares Programm umfasst, um einen Rechner zu veranlassen, innerhalb einer Entität in dem Gateway-Knoten (105) nach einem der Ansprüche 30-36, eine Ausführung des Verfahrens nach einem der Ansprüche 12-18 zu steuern.

## Revendications

1. Procédé dans un dispositif sans fil (101) pour traiter des messages dans un système de communications (100), dans lequel le dispositif sans fil (101) est agencé pour envoyer de petites quantités de données, le procédé comprenant :
*l'acheminement* (203, 504, 604a, 607b, 801) d'un message en voie montante UL via une interface radio à un noeud de réseau d'accès radio RAN (103) ;
*la réception* (210, 508, 607a, 608b, 802) d'une réponse au message UL du noeud RAN (103), dans lequel la réponse comprend une indication d'attente d'un message en voie descendante DL adressé et attendant d'être transmis au dispositif sans fil (101), dans lequel l'indication d'attente de message est reçue du noeud RAN (103) en tant que partie d'une signalisation d'interface radio pour le message UL et n'utilisant pas une porteuse radio ; et,
lorsque l'indication d'attente de message du message DL a été reçue, le traitement (211, 803) de l'indication reçue en établissant une porteuse radio dans le système de communications (100) ; et la récupération d'au moins une partie du message DL en attente d'un noeud où le message DL a été stocké via la porteuse radio établie.

2. Procédé selon la revendication 1, comprenant en outre :
*le traitement* (509, 608a, 609b, 803) de l'indication reçue par récupération d'au moins une partie du message DL indiqué.

3. Procédé selon l'une quelconque des revendications 1-2, dans lequel l'indication du message DL a été réglée (202, 502, 602a, 602b) par le noeud RAN (103) ou par un noeud de passerelle (105).

4. Procédé selon l'une quelconque des revendications 1-3, dans lequel l'indication est au moins l'un(e) d'un drapeau et d'au moins une partie du message DL lui-même.

5. Procédé dans un noeud de réseau d'accès radio RAN (103) pour traiter des messages dans un système de communications (100), le procédé comprenant :
*la réception* (203, 504, 604a, 607b, 1001) d'un message en voie montante UL via une interface radio d'un dispositif sans fil (101), dans lequel le dispositif sans fil (101) est agencé pour envoyer de petites quantités de données ;
*l'obtention* (205, 209, 505, 507, 1004) d'une indication d'attente d'un message en voie descendante DL adressé au dispositif sans fil (101) et attendant d'être transmis au dispositif sans fil (101) ;
*la transmission* (210, 508, 607a, 608b, 1005) d'une réponse au message UL au dispositif sans fil (101), dans lequel la réponse comprend l'indication d'attente de message au dispositif sans fil (101) en tant que partie d'une signalisation d'interface radio pour le message UL et n'utilisant pas une porteuse radio ; et
*la transmission* (211, 509, 608a, 609b, 1006) d'au moins une partie du message DL au dispositif sans fil (101) en utilisant une porteuse radio.

6. Procédé selon la revendication 5, dans lequel l'indication est obtenue par voie interne dans le noeud RAN (103) lui-même.

7. Procédé selon la revendication 5, dans lequel l'indication du message DL est obtenue en la recevant du noeud de passerelle (105).

8. Procédé selon l'une quelconque des revendications 5-7, comprenant en outre :
*la transmission* (205, 505, 1003) du message UL à un noeud de passerelle (105).

9. Procédé selon la revendication 8, comprenant en outre :
*la détermination* (204, 505, 1002) du noeud de passerelle qui est affecté au dispositif sans fil (101) ; et dans lequel le message UL est transmis au noeud de passerelle déterminé (105).

10. Procédé selon la revendication 9, dans lequel la détermination (204) du noeud de passerelle qui est affecté au dispositif sans fil (101) est effectuée sur la base d'un routage en fonction de règles.

11. Procédé selon l'une quelconque des revendications 5-10, dans lequel l'indication est au moins l'un(e) d'un drapeau et d'au moins une partie du message DL lui-même.

12. Procédé dans un noeud de passerelle (105) pour traiter des messages dans un système de communications (100), le procédé comprenant :
*la réception* (205, 505, 1203) d'un dispositif sans fil (101) via un noeud de réseau d'accès radio RAN (103) d'un message en voie montante UL adressé à un serveur de réseau (110), dans lequel le dispositif sans fil (101) est agencé pour envoyer de petites quantités de données ;
*la fourniture* (209, 507, 1206) à un noeud de réseau d'accès radio RAN (103) d'informations associées à un message en voie descendante DL adressé au dispositif sans fil (101) ; et
*le réglage* (202, 502, 602a, 602b, 1202) d'une indication d'attente du message DL adressé et attendant d'être transmis au dispositif sans fil (101) ; et
dans lequel les informations associées au message DL fourni au noeud RAN (103) sont l'indication du message DL adressé au noeud RAN (103).

13. Procédé selon la revendication 12, dans lequel les informations associées au message DL fourni au noeud RAN (103) sont au moins une partie du message DL.

14. Procédé selon l'une quelconque des revendications 12-13, comprenant en outre :
*la réception* (201, 501, 601a, 601b, 1201) d'un message en voie descendante DL adressé au dispositif sans fil (101).

15. Procédé selon la revendication 14, comprenant en outre :
*la mise au rebut* (207, 1207) du message DL reçu lorsque les informations associées au message DL ont été fournies au noeud RAN (103).

16. Procédé selon l'une quelconque des revendications 12-15, comprenant en outre :
*la fourniture* (606a, 604b, 1204) à un noeud d'enregistrement (108) d'une indication du message DL adressé au dispositif sans fil (101).

17. Procédé selon la revendication 16, comprenant en outre :
*l'effacement* (610b, 611b, 1208) de l'indication telle qu'elle est instruite par le noeud d'enregistrement (108).

18. Procédé selon l'une quelconque des revendications 12-17, comprenant en outre :
sur la base d'un message UL reçu du noeud RAN (103), *la détermination* (208, 1205) que le noeud RAN (103) est le noeud RAN qui dessert le dispositif sans fil (101) ;
dans lequel les informations associées au message DL sont fournies au noeud de desserte RAN déterminé (103).

19. Dispositif sans fil (101) pour traiter des messages dans un système de communications (100), dans lequel le dispositif sans fil (101) est agencé pour envoyer de petites quantités de données, le dispositif sans fil (101) étant agencé pour :
acheminer un message en voie montante UL via une interface radio à un noeud de réseau d'accès radio RAN (103) ;
recevoir une réponse au message UL du noeud RAN (103), dans lequel la réponse comprend une indication d'attente de message d'un message en voie descendante DL adressé et attendant d'être transmis au dispositif sans fil (101), dans lequel l'indication est reçue du noeud RAN (103) en tant que partie d'une signalisation d'interface radio pour le message UL et n'utilisant pas une porteuse radio ; et,
lorsque l'indication du message DL a été reçue, traiter l'indication reçue en établissant une porteuse radio dans le système de communications (100) ; et
récupérer au moins une partie du message DL en attente d'un noeud où le message DL a été stocké via la porteuse radio établie.

20. Dispositif sans fil (101) selon la revendication 19, agencé en outre pour traiter l'indication reçue en récupérant au moins une partie du message DL indiqué.

21. Dispositif sans fil (101) selon l'une quelconque des revendications 19-20, dans lequel l'indication du message DL a été réglée (202, 502, 602a, 602b) par le noeud RAN (103) ou par un noeud de passerelle (105).

22. Dispositif sans fil (101) selon l'une quelconque des revendications 19-21, dans lequel l'indication est au moins l'un(e) parmi un drapeau et au moins une partie du message DL lui-même.

23. Noeud de réseau d'accès radio RAN (103) pour traiter des messages dans un système de communications (100), le noeud RAN (103) étant agencé pour :
*recevoir* un message en voie montante UL via une interface radio d'un dispositif sans fil (101), dans lequel le dispositif sans fil (101) est agencé pour envoyer de petites quantités de données ;
*obtenir* une indication d'attente d'un message en voie descendante DL adressé et attendant d'être transmis au dispositif sans fil (101) ;
*transmettre* une réponse au message UL au dispositif sans fil (101), dans lequel la réponse comprend l'indication d'attente de message au dispositif sans fil (101) en tant que partie d'une signalisation d'interface radio pour le message UL et n'utilisant pas une porteuse radio ; et
transmettre au moins une partie du message DL au dispositif sans fil (101) en utilisant une porteuse radio.

24. Noeud RAN (103) selon la revendication 23, dans lequel l'indication est obtenue par voie interne dans le noeud RAN (103) lui-même.

25. Noeud RAN (103) selon la revendication 23, dans lequel l'indication du message DL est obtenue en la recevant du noeud de passerelle (105).

26. Noeud RAN (103) selon l'une quelconque des revendications 23-25, agencé en outre pour transmettre le message UL à un noeud de passerelle (105).

27. Noeud RAN (103) selon la revendication 26, agencé en outre pour déterminer le noeud de passerelle qui est affecté au dispositif sans fil (101) ; et dans lequel le message UL est transmis au noeud de passerelle déterminé (105).

28. Noeud RAN (103) selon la revendication 27, agencé en outre pour déterminer le noeud de passerelle qui est affecté au dispositif sans fil (101) sur la base d'un routage en fonction de règles.

29. Noeud RAN (103) selon l'une quelconque des revendications 23-28, dans lequel l'indication est au moins l'un(e) d'un drapeau et d'au moins une partie du message DL lui-même.

30. Noeud de passerelle (105) pour traiter des messages dans un système de communications (100), le noeud de passerelle (105) étant agencé pour :
recevoir d'un dispositif sans fil (101) via un noeud de réseau d'accès radio RAN (103) un message en voie montante UL adressé à un serveur de réseau (110), dans lequel le dispositif sans fil (101) est agencé pour envoyer de petites quantités de données ;
fournir à un noeud de réseau d'accès radio RAN (103) des informations associées à un message en voie descendante DL adressé au dispositif sans fil (101) ; et
régler une indication d'attente du message DL adressé et attendant d'être transmis au dispositif sans fil (101) ; et dans lequel les informations DL fournies au noeud RAN (103) sont l'indication du message DL adressé au noeud RAN (103).

31. Noeud de passerelle (105) selon la revendication 30, dans lequel les informations associées au message DL fournies au noeud RAN (103) sont au moins une partie du message DL.

32. Noeud de passerelle (105) selon l'une quelconque des revendications 30-31, agencé en outre pour recevoir un message en voie descendante DL adressé au dispositif sans fil (101).

33. Noeud de passerelle (105) selon la revendication 32, agencé en outre pour mettre au rebut le message DL reçu lorsque les informations associées au message DL ont été fournies au noeud RAN (103).

34. Noeud de passerelle (105) selon l'une quelconque des revendications 30-33, agencé en outre pour fournir à un noeud d'enregistrement (108) une indication du message DL adressé au dispositif sans fil (101).

35. Noeud de passerelle (105) selon la revendication 34, agencé en outre pour effacer l'indication telle qu'instruite par le noeud d'enregistrement (108).

36. Noeud de passerelle (105) selon l'une quelconque des revendications 30-35, agencé en outre pour, sur la base d'un message UL reçu du noeud RAN (103), déterminer que le noeud RAN (103) est le noeud RAN qui dessert le dispositif sans fil (101) ;
dans lequel les informations associées au message DL sont fournies au noeud de desserte RAN déterminé (103).

37. Produit de programme d'ordinateur stocké sur un support utilisable sur ordinateur, dans lequel le produit de programme d'ordinateur comprend un programme lisible par ordinateur pour amener un ordinateur, dans une entité du dispositif sans fil (101) selon l'une quelconque des revendications 19-22, à commander une exécution du procédé selon l'une quelconque des revendications 1-4.

38. Produit de programme d'ordinateur stocké sur un support utilisable sur ordinateur, dans lequel le produit de programme d'ordinateur comprend un programme lisible par ordinateur pour amener un ordinateur, dans une entité du noeud RAN (103) selon l'une quelconque des revendications 23-29, à commander une exécution du procédé selon l'une quelconque des revendications 5-11.

39. Produit de programme d'ordinateur stocké sur un support utilisable sur ordinateur, dans lequel le produit de programme d'ordinateur comprend un programme lisible par ordinateur pour amener un ordinateur, dans une entité du noeud de passerelle (105) selon l'une quelconque des revendications 30-36, à commander une exécution du procédé selon l'une quelconque des revendications 12-18.
